(19)

Europäisches
Patentamt
European
Patent Office
Office européen
des brevets

(11) **EP 4 346 130 A2**

(12) **EUROPEAN PATENT APPLICATION**

(43) Date of publication:
**03.04.2024  Bulletin 2024/14**

(21) Application number: **23196670.6**

(22) Date of filing: **11.09.2023**

(51) International Patent Classification (IPC):
**H04B 17/21** (2015.01)    **H04W 88/08** (2009.01)

(52) Cooperative Patent Classification (CPC):
**H04B 17/21; H04W 88/085**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority:  **09.09.2022  US 202263405001 P**

(71) Applicant: **Nokia Solutions and Networks Oy 02610 Espoo (FI)**

(72) Inventors:
  • **LE, Thai Son**
    **Bedminster, NJ (US)**

  • **TRAN, Cuong**
    **Howell, NJ (US)**
  • **SAUR, Stephan**
    **Stuttgart (DE)**
  • **BATRA, Nishant**
    **Helsinki (FI)**
  • **VISWANATHAN, Harish**
    **Basking Ridge, NJ (US)**
  • **ARNOLD, Maximilian**
    **Murrhardt (DE)**

(74) Representative: **Nokia EPO representatives Nokia Technologies Oy Karakaari 7 02610 Espoo (FI)**

(54) **METHOD OF EXTRACTING TIME DIFFERENCE OF ARRIVAL OF A SIGNAL AT MULTIPLE TRANSMISSION RECEPTION POINTS WITHOUT EXPLICIT SYNCHRONIZATION**

(57)    In accordance with example embodiments of the invention there is at least a method an apparatus to perform processing a signal from a calibration antenna sent though at least one other antenna of a remote transmission reception point and multiplexed with a broadcast calibration signal to create a multiplexed calibration signal to estimate relative delays; processing a signal broadcast from a known position at an intermediate frequency from the calibration antenna to at least one remote transmission reception point unit, that is received by at least one antenna of another remote transmission reception point and multiplexed with the internal calibration antenna signal to create the multiplexed signal, said processing including; filtering and amplification of each antenna signal with a low-noise amplifier (LNA) in the analogue frontend; mixing down, with a pre-processing circuit of the apparatus, each antenna signal to an individual intermediate frequency, IFi, i = 1, 2,...N; triggering local oscillation by a reference clock (REF Clk); summing up each antenna signals for frequency multiplexing; and amplifying and translating the electrical summed signal into an optical signal for an optical domain; and calibrating the propagation delays from all antenna elements in the system with one of a dual band calibration antenna or two separate antennas at a known position.

FIG. 9

EP 4 346 130 A2

**Description**

TECHNICAL FIELD:

The teachings in accordance with the exemplary embodiments of this invention relate generally to extracting time difference of arrival of a signal, and more specifically relate to extracting time difference of arrival of a signal at multiple transmission reception points without explicit synchronization.

BACKGROUND:

This section is intended to provide a background or context to the invention that is recited in the claims. The description herein may include concepts that could be pursued, but are not necessarily ones that have been previously conceived or pursued. Therefore, unless otherwise indicated herein, what is described in this section is not prior art to the description and claims in this application and is not admitted to be prior art by inclusion in this section.

Certain abbreviations that may be found in the description and/or in the Figures are herewith defined as follows:

| | |
|---|---|
| ADC | Analog Digital Converter |
| AFE | Analog Frontend |
| AoA | Angle of Arrival |
| CPL | Coupler |
| CTPU | Central TRP Processing Unit |
| DFB | Distributed Feedback laser diode |
| DPD | Digital Phase Detector |
| GPU | Graphics Processing Unit |
| HW | Hardware |
| IF | Intermediate Frequency |
| LO | Local Oscillator |
| LOS | Line of Sight |
| MIMO | Multiple Input Multiple Output |
| MUX | Multiplexer |
| OTA | Over the Air |
| PoC | Proof of Concept |
| PPS | Pulse per Second |
| pRRH | Pico Remote Radio Head |
| PTP | Precision Time Protocol |
| TIA | Transimpedance Amplifier |
| REF Clk | Reference Clock |
| RoF | Radio over Fiber |
| RP | Reception Point |
| RTU | Remote TRP Unit |
| SME | Small / Medium Enterprise |
| SNR | Signal to Noise Ratio |
| SRS | Sounding Reference Signal |
| ToA | Time of Arrival |
| TRP | Transmission Reception Point |
| UE | User Equipment |
| LTL-TDoA | Uplink Time Difference of Arrival |

Precise indoor positioning has become an increasingly important topic for private 5G indoor and campus networks, e.g., in a factory hall. Therefore, Bell Labs has set up a proof-of-concept (PoC) in the ARENA2036, a research campus in Stuttgart, Germany, where industry (Nokia, Bosch, Daimler, and others), small and medium enterprises (SME)s and academia work together to develop tailored solutions for future mobility and production. The ARENA2036 is equipped with a private 5G system, produced and maintained by Nokia. Core of the PoC is the prototype of a measurement unit, which receives and processes uplink signals from user equipment (LTE)s to estimate the Time-of-Arrival (ToA) and Angle-of-Arrival (AoA). Measurements from many such units are required to estimate the position of the UEs. There is achieved 50 cm accuracy with 95% of the measurements. The PoC has raised big interest in Mobile Networks and Cloud & Network Services.

Example embodiments of the invention relate to best possible productization strategies of positioning solutions for at least precise indoor positioning as discussed above.

SUMMARY:

This section contains examples of possible implementations and is not meant to be limiting.

In an example aspect of the invention, there is an apparatus, such as a transmission reception point apparatus, performing operations comprising: processing a signal from a calibration antenna sent though at least one other antenna of a remote transmission reception point and multiplexed with a broadcast calibration signal to create a multiplexed calibration signal to estimate relative delays; processing a signal broadcast from a known position at an intermediate frequency from the calibration antenna to at least one remote transmission reception point unit, that is received by at least one antenna of another remote transmission reception point and multiplexed with the internal calibration antenna signal to create the multiplexed signal, said processing comprising; filtering and amplification of each antenna signal with a low-noise amplifier (LNA) in the analogue frontend; mixing down, with a pre-processing circuit of the apparatus, each antenna signal to an individual intermediate frequency, IFi, i = 1, 2,...N; triggering local oscillation by a reference clock (REF Clk); summing up each antenna signals for frequency multiplexing; and amplifying and translating the electrical summed signal into an optical signal for an optical domain; and calibrating the propagation delays from all antenna elements in the system with one of a dual band calibration antenna or two separate antennas at a known position.

In another example aspect of the invention, there is a method comprising: processing a signal from a calibration antenna sent though at least one other antenna of a remote transmission reception point and multiplexed with a broadcast calibration signal to create a multiplexed calibration signal to estimate relative delays; processing a signal broadcast from a known position at an intermediate frequency from the calibration antenna to at least one remote transmission reception point unit, that is received by at least one antenna of another remote transmission reception point and multiplexed with the internal calibration antenna signal to create the multiplexed signal, said processing comprising; filtering and amplification of each antenna signal with a low-noise amplifier (LNA) in the analogue frontend; mixing down, with a preprocessing circuit of the apparatus, each antenna signal to an individual intermediate frequency, IFi, i = 1, 2,...N; triggering local oscillation by a reference clock (REF Clk); summing up each antenna signals for frequency multiplexing; and amplifying and translating the electrical summed signal into an optical signal for an optical domain; and calibrating the propagation delays from all antenna elements in the system with one of a dual band calibration antenna or two separate antennas at a known position.

A further example embodiment is an apparatus and a method comprising the apparatus and the method of the previous paragraphs, wherein the mixing down each antenna signal to an individual intermediate frequency, IFi, i = 1, 2,...N is performed so that intermediate frequency bands of the at least one carrier frequency signal do not overlap with each other, wherein the pre-processed at least one carrier frequency signal is divided into N copies, and wherein the N copies are distributed with controlled path lengths to N antennas using N directional couplers (CPL 1, CPL 2,...CPL N ) for transporting the optical signal to a central processing unit apparatus associated with the communication network, wherein after multiplexing the antenna signals at least one of the internal calibration antenna signal is used for calibrating the delays among elements within the at least one remote transmission reception point or a known location antenna signal is used for calibrating the delays among the at least one remote transmission reception point, wherein the translating comprises synchronization is achieved with identical pre-processing in the more than one transmission reception point apparatus, wherein the identical pre-processing is based on known or identical fiber lengths between each of the more than one transmission reception point apparatus and the central processing unit apparatus, no significant temperature differences within a set of the more than one transmission reception point and within a set of fibers due to the indoor deployment, and consolidated sampling controlled by reference clock of all signals in a analog to digital converter block, wherein the creating the multiplexed calibration signal to estimate relative delays comprises: filtering and amplification of a signal at the more than one antenna with a low-noise amplifier in an analogue frontend, wherein the creating the multiplexed calibration signal to estimate relative delays comprises: the signal is mixed down with a pre-processing circuit to an antenna-individual intermediate frequency such that intermediate frequency bands don't overlap with each other, wherein the correction of the identified relative delays comprises: further filtering and summing up non-overlapping antenna signals to be equivalent to frequency multiplexing; and/or after amplification of the summed signals, an optical modulator comprising a distributed feedback laser diode translates the broadcast signal into an optical domain.

A non-transitory computer-readable medium storing program code, the program code executed by at least one processor to perform at least the method as described in the paragraphs above.

In another example aspect of the invention, there is an apparatus comprising: means for processing a signal from a calibration antenna sent though at least one other antenna of a remote transmission reception point and multiplexed with a broadcast calibration signal to create a multiplexed calibration signal to estimate relative delays; means for processing a signal broadcast from a known position at an intermediate frequency from the calibration antenna to at least one remote transmission reception point unit, that is received by at least one antenna of another remote transmission reception point and multiplexed with the internal calibration antenna signal to create the multiplexed signal, said processing comprising; means for filtering and amplification of each antenna signal with a low-noise amplifier (LNA) in the analogue frontend; means for mixing down, with a preprocessing circuit of the apparatus, each antenna signal to an individual intermediate frequency, IFi, i = 1, 2,...N; means for triggering local oscillation by a reference clock (REF Clk); means for summing up each antenna signals for frequency multiplexing; and means for amplifying and translating the electrical summed signal into an optical signal for an optical domain; and means for calibrating the propagation delays from all antenna elements in the system with one of a dual band calibration antenna or two separate antennas at a known position.

In accordance with the example embodiments as described in the paragraph above, at least the means for processing, filtering, mixing down, triggering, amplifying, translating, and calibrating comprises a non-transitory computer readable medium encoded with a computer program executable by at least one processor.

In an example aspect of the invention, there is an apparatus, such as a central processing unit apparatus, central processing unit apparatus, comprising: at least one processor; and at least one non-transitory memory including computer program code, where the at least one non-transitory memory and the computer program code are configured with the at least one processor to cause the apparatus to at least: translate, in an electrical domain, a frequency multiplexed optical signal comprising a pre-processed at least one carrier frequency signal from more than one antenna array received over an uplink from a transmission reception point apparatus; digitize the optical signal centrally in an analogue to digital conversion (ADC) block; synchronize the digitized optical signal; perform digital down conversion of the digitized optical signal to the baseband; and with a baseband process, determine a time of arrival (ToA) and an angle of arrival (AoA) of the uplink signal received at each antenna array.

In another example aspect of the invention, there is a method comprising: translating, in an electrical domain, a frequency multiplexed optical signal comprising a pre-processed at least one carrier frequency signal from more than one antenna array received over an uplink from a transmission reception point apparatus; digitizing the optical signal centrally in an analogue to digital conversion (ADC) block; synchronizing the digitized optical signal; performing digital down conversion of the digitized optical signal to the baseband; and with a baseband process, determining a time of arrival (ToA) and an angle of arrival (AoA) of the uplink signal received at each antenna array.

A further example embodiment is an apparatus and a method comprising the apparatus and the method of the previous paragraphs, wherein there is synchronizing the digitized optical signal comprising processing a multiplexed calibration signal using a calibration antenna to estimate and calibrate relative delays associated with the multiplexed signal among each antenna array for the more than one transmission reception point apparatus; identifying the relative delays from the multiplexor to the central transmission reception point processing unit; and based on the identifying, perform correction of the identified relative delays among the more than one antenna, wherein processing the multiplexed calibration signal to estimate and calibrate relative delays associated with the multiplexed signal comprises: filtering and amplification of a signal at the more than one antenna with a low-noise amplifier in an analogue frontend, wherein processing the multiplexed calibration signal to estimate and calibrate relative delays associated with the multiplexed signal comprises: the signal is mixed down with a pre-processing circuit to an antenna-individual intermediate frequency such that intermediate frequency bands don't overlap with each other, wherein the correction of the identified relative delays comprises: further filtering and summing up non-overlapping antenna signals to be equivalent to frequency multiplexing; and after amplification of the summed signals, an optical modulator comprising a distributed feedback laser diode translates the broadcast signal into an optical domain, wherein values comprising delay offsets between the more than one antenna estimated using an array of digital phase detectors (DPD), wherein the values are stored in memory for table lookup for correction during operation, wherein the correction of the identified relative delays among the more than one antenna is performed for accurately estimating at least one of the time of arrival or angle of arrival value coordinates of the uplink signal received at each antenna array, wherein processing the multiplexed calibration signal comprises: a photodiode with transimpedance amplifier translates an optical signal back in an electrical domain; digitalization and baseband processing of selected ones of the at least one remote transmission reception point unit signals in the central transmission reception point processing unit; signals from all the at least one remote transmission reception point unit are digitized centrally in an analogue to digital conversion block, wherein synchronization is achieved through identical pre-processing in all the at least one remote transmission reception point unit; and known or identical fiber lengths between the at least one remote transmission reception point unit and the central transmission reception point processing unit, no significant temperature differences within the set of the at least one remote transmission reception point unit and within the set of fibers due to the indoor deployment, consolidated sampling controlled by central clock of all signals in the analog to digital conversion block, wherein the identical pre-processing is based on known or identical fiber lengths between each of the more than one transmission reception point apparatus and the central processing unit apparatus, no significant temperature differences within a set of the more than one transmission reception point and within a set of fibers due to the indoor deployment, and consolidated sampling controlled by central clock of all signals in a analog to digital converter block, wherein processing the multiplexed calibration signal comprises a localization method where the processing is centralized at the central transmission reception point processing unit and the central transmission reception point processing unit selects only a subset of the at least one remote transmission reception point unit for processing for minimizing the computing power and/or hardware resources, wherein the localization method is using time of arrival, and a known propagation delay from each of the at least one remote transmission reception point unit, wherein processing the multiplexed calibration signal comprises: identified relative delays are determined with the signal that is digitized and with delay offsets between antennas estimated using an array of digital phase detector (DPD), wherein the identified delays are sent towards the at least one remote transmission reception point unit and stored in memory for table lookup for the correcting, wherein performing correction of the identified relative delays comprises: correcting delays among the more than one antenna using a tone at the carrier frequency from the calibration antenna, or correcting delays among the more than one antenna using a tone at the carrier frequency divided into more than one copy and distributed with controlled path lengths to the more than one antenna using more than one directional couplers, wherein the frequency multiplexed optical signal is received from the calibration antenna, and/or wherein the calibration antenna comprises a dual band antenna or more than one separate antenna.

In an example aspect of the invention, there is apparatus, such as a system apparatus, comprising at least one processor; and at least one non-transitory memory including computer program code, where the at least one non-transitory memory and the computer program code are configured, with the at least one processor, to cause the apparatus to at least: detect, a calibration signal that is multiplexed and transmitted at a carrier frequency by at least one remote transmission reception point unit from more than one antenna to a central transmission reception point processing unit; process the multiplexed calibration signal using a calibration antenna to estimate and calibrate relative delays associated with the multiplexed calibration signal among the more than one antenna for each of the at least one remote transmission reception point unit; determine a signal broadcast from a known position at an intermediate frequency from the calibration antenna and received with the at least one remote transmission reception point unit, wherein the broadcast signal comprises the processed multiplexed calibration signal; identify the relative delays among the more than one antenna from the multiplexor to the central transmission reception point processing unit; and based on the identifying, perform correction of the identified relative delays among the more than one antenna for accurately estimating at least one of time of arrival or angle of arrival value coordinates.

In another example aspect of the invention, there is a method comprising: detecting, a calibration signal that is multiplexed and transmitted at a carrier frequency by at least one remote transmission reception point unit from more than one antenna to a central transmission reception point processing unit; processing the multiplexed calibration signal using a calibration antenna to estimate and calibrate relative delays associated with the multiplexed calibration signal among the more than one antenna for each of the at least one remote transmission reception point unit; determining a signal broadcast from a known position at an intermediate frequency from the calibration antenna and received with the at least one remote transmission reception point unit, wherein the broadcast signal comprises the processed multiplexed calibration signal; identifying the relative delays among the more than one antenna from the multiplexor to the central transmission reception point processing unit; and based on the identifying, performing correction of the identified relative delays among the more than one antenna for accurately estimating at least one of time of arrival or angle of arrival value coordinates.

A further example embodiment is an apparatus and a method comprising the apparatus and the method of the previous paragraphs, wherein the identified relative delays are stored in memory for table lookup for the correcting, wherein the broadcast signal is received using an intermediate frequency antenna coupled to a multiplexor, wherein the determining comprises the broadcast signal is digitized at an analog to digital converter and delay offsets between the more than one antenna are estimated using an array of digital phase detector, wherein the determining comprises correcting delays among the more than one antenna using a tone at the carrier frequency from the calibration antenna, or correcting delays among the more than one antenna using a tone at the carrier frequency divided into more than one copy and distributed with controlled path lengths to the more than one antenna using more than one directional couplers, wherein the correction of the identified relative delays comprises: filtering and amplification of the broadcast signal at the more than one antenna with a low-noise amplifier in an analogue frontend, wherein the correction of the identified relative delays comprises: the broadcast signal is mixed down with a pre-processing circuit to an individual intermediate frequency such that intermediate frequency bands don't overlap with each other, wherein the correction of the identified relative delays comprises: further filtering and summing up non-overlapping antenna signals are summed up to be equivalent to frequency multiplexing; and after amplification of the summed signals, an optical modulator comprising a distributed feedback laser diode translates the broadcast signal into an optical domain, wherein processing the multiplexed calibration signal comprises: digitalization and baseband processing of selected ones of the at least one remote transmission reception point unit signals in the central transmission reception point processing unit, a photodiode with transimpedance amplifier translates an optical signal back in an electrical domain, signals from all the at least one remote transmission reception point unit are digitized centrally in an analogue to digital conversion block, wherein synchronization is achieved through identical pre-processing in all the at least one remote transmission reception point unit, identical fiber length between the at least one remote transmission reception point unit and the central transmission reception point processing unit, no significant temperature differences within the set of the at least one remote transmission reception point unit and within the set of fibers due to the indoor deployment, consolidated sampling controlled by central clock of all signals in the analog to digital conversion block, wherein processing the multiplexed calibration signal comprises a localization method where the processing is centralized at the central transmission reception point processing unit and the central transmission reception point processing unit selects only a subset of the at least one remote transmission reception point unit for processing for minimizing the computing power and/or hardware resources, wherein for localization method is using time of arrival, and a known propagation delay from the at least one remote transmission reception point unit to the central transmission reception point processing unit, and/or wherein the calibration antenna comprises a dual band antenna or more than one separate antenna.

A non-transitory computer-readable medium storing program code, the program code executed by at least one processor to perform at least the method as described in the paragraphs above.

In another example aspect of the invention, there is an apparatus comprising: means for detecting, a calibration signal that is multiplexed and transmitted at a carrier frequency by at least one remote transmission reception point unit from more than one antenna to a central transmission reception point processing unit; means for processing the multiplexed calibration signal using a calibration antenna to estimate and calibrate relative delays associated with the multiplexed calibration signal among the more than one antenna for each of the at least one remote transmission reception point unit; means for determining a signal broadcast from a known position at an intermediate frequency from the calibration antenna and received with the at least one remote transmission reception point unit, wherein the broadcast signal comprises the processed multiplexed calibration signal; means for identifying the relative delays among the more than one antenna from the multiplexor to the central transmission reception point processing unit; and means, based on the identifying, for performing correction of the identified relative delays among the more than one antenna for accurately estimating at least one of time of arrival or angle of arrival value coordinates.

In accordance with the example embodiments as described in the paragraph above, at least the means for detecting, processing, determining, identifying, and performing comprises a network interface, and computer program code stored on a computer-readable medium and executed by at least one processor.

A communication system comprising a network side apparatus or a user equipment side apparatus performing operations as described above.

BRIEF DESCRIPTION OF THE DRAWINGS:

The above and other aspects, features, and benefits of various embodiments of the present disclosure will become more fully apparent from the following detailed description with reference to the accompanying drawings, in which like reference signs are used to designate like or equivalent elements. The drawings are illustrated for facilitating better understanding of the embodiments of the disclosure and are not necessarily drawn to scale, in which:

FIG. 1 shows a multiplex receiver;

FIG. 2 shows an optical backhaul;

FIG. 3 shows a split TRP architecture;

FIG. 4 shows an example of implementation where each RTU is equipped with a calibration antenna;

FIG. 5 shows an implementation of RTU with a 1:N power divider and an array of N directional couplers (CPLs) for calibration purpose;

FIG. 6A and 6B shows SNR at the end of a RoF link (after PIN-TIA) as a function of the IF signal power (before a directly modulated laser); the aggregated radio bandwidth was 800 MHz (8x100 Mhz) and the center IF frequency was 3 GHz; b) - 64 Constellation (for all subcarriers over 800 MHz of bandwidth) at an IF signal power of -10 dBm;

FIG. 7 shows defining delay offsets between antennas in each RTU at the CTPU in the calibration mode;

FIG. 8 shows demultiplexing and down converting IF signals received at each RTU antenna array to baseband for ToA and AoA estimation;

FIG. 9 shows System calibration using a single calibration antenna at a known location;

FIG. 10 shows a flow chart for the 2-stage calibration procedure and how the CTPU operates during and after the calibration process;

FIG. 11 shows a simplified block diagram of the central signal processor where a subset of the RTUs are chosen for processing in order to minimize the computing power;

FIG. 12 shows a high level block diagram of various devices used in carrying out various aspects of the invention; and

FIG. 13A, 13B, and 13C each show a method in accordance with example embodiments of the invention which may be performed by an apparatus.

DETAILED DESCRIPTION:

In example embodiments of this invention there is proposed at least a method and apparatus to perform extracting time difference of arrival of a signal at multiple transmission reception points without explicit synchronization.

As similarly stated above, Precise indoor positioning has become an increasingly important topic for private 5G indoor and campus networks, and a proof of concept has raised big interest in Mobile Networks and Cloud & Network Services.

In the 3GPP architecture the measurement unit is a Sounding Reference Signal (SRS)-only Reception Point (RP), which is a special case of a Transmission Reception Point (TRP), a remote unit which in turn is considered as part of the gNB.

In the following there is described example embodiments of the invention assuming Rel-16 uplink positioning methods. Please mind that a similar concept can be applied for downlink positioning methods as well. Moreover, the concept can be applied for all other 3GPP and non-3GPP radio technologies. Some examples are LTE, New Radio (Rel-15), Wi-Fi, Bluetooth.

One of the envisaged positioning methods is Uplink Time Difference of Arrival (UL-TDoA). It is based on the difference of ToA measurement from two spatially separated TRPs $i$ and $j$.

The ToA measurement $T_i$ at TRP $i$ is the sum of the propagation time $\tau_i$, the unknown timing offset of the UE $X^{UE}$ and the unknown timing offset of the TRP

$$X_i^{TRP} \quad T_i = \tau_i + X^{UE} + X_i^{TRP}$$

.

Obviously, the unknown transmission time of the UE $X^{UE}$ can be eliminated when calculating the TDoA

$$\Delta_{ij} = T_i - T_j = \tau_i - \tau_j + X_i^{TRP} - X_j^{TRP}$$

. However, the timing offsets of the TRPs are still present and falsify the TDoA measurement. Furthermore, the offsets

$$X_i^{TRP}$$

are time-variant. Typically they drift over time. A timing offset of 1 ns causes a ranging difference of 30 cm.. This can be avoided by synchronizing the clocks and the timings, i.e., 10 MHz and pulse per second (PPS), of all TRPs, i.e., by ensuring that the timing offsets of all TRPs are the same $X_i^{TRP} = X^{TRP} \ \forall \ i$. In this case $\Delta_{ij} = T_i - T_j$, i.e., measure solely the difference of the propagation time and can determine the position of the LTE easily by multilateration leveraging the known TRP positions.

A well-known method to synchronize TRPs is White Rabbit, an extension of the IEEE 1588 Precision Time Protocol (PTP). In the PoC White Rabbit is implemented. Measurements with the PoC have shown that with White Rabbit the timing offset $X_i^{TRP} - X_j^{TRP}$ between two TRPs can be bounded to 200 ps. This leads to a positioning inaccuracy due to timing misalignment of approximately 6 cm in the PoC, which is still acceptable for most indoor positioning use cases. Investigating the cost drivers in the PoC, White Rabbit turned to be one of the key elements as the materials are expensive and the setup cost is larger due to additional wiring. Furthermore, White Rabbit cannot be integrated smoothly in existing products (pRRH), which would lead to additional development cost and a delayed rollout. As many distributed TRPs are required in the area of interest to achieve accurate positioning - current working assumption is a grid with 20m inter site distance - a high price for a single TRP makes the complete solution unattractive for a customer.

The addressed problem in this invention is therefore the design of a low-cost TRP without White Rabbit while the required level of synchronization, i.e., the alignment of the timing offsets $X_i^{TRP}$ of all TRPs is still maintained.

A second major reason for the high cost of the TRP is related to the required computing power. As processing is distributed within each TRP, each one has to be equipped with its own processing unit. Centralized processing that combines the processing required across all the TRPs can reduce the overall processing cost using highly integrated processing hardware. This can be easily explained as a larger processing unit (without space constraints) can contain multiple GPUs to parallelize processing, while a GPU on the TRP is unfeasible. In principle centralized processing may be enabled by transmitting the digitized, high resolution I/Q samples over a fiber link, but this results in the need for high capacity fronthaul link to the centralized processing unit resulting in high total cost.

A submission of example embodiments of the invention are split into two parts where a first part relates to an inherent calibration is achieved which needs to compare to prior art of other calibration methods, and a second part relates to a hardware/signaling architecture to achieve this synchronization, which is compared against other structures.

In standards operations at the time of this application there are:

1). Calibration methods:

White Rabbit as a prior art is explained in the problem section.

A known alternative to avoid cable-based synchronization methods like White Rabbit is an over-the-air (OTA) synchronization. In this case a so-called reference UE at known position is utilized to determine the unknown timing offset $X_i^{TRP} - X_j^{TRP}$ between each pair of TRPs. With such calibration measurements it is possible to compensate the timing misalignment between TRPs also for all other UEs at unknown positions. However OTA synchronization has the following issues:

- Line-of-sight (LOS) between the reference UE and a pair of TRPs is needed to measure the timing offset between these TRPs. This means that eventually many reference LTEs are required to ensure LOS to all TRPs. This is expensive regarding energy and setup cost;

- $X_i^{TRP}$ is time variant Calibration measurements with the reference UEs must be done periodically to detect timing drifts between the TRPs. These measurements need radio resources and reduce the spectral efficiency of other services; and

- If the layout of the factory hall changes, e.g., the flow of production is modified, or new robots are installed, the LOS condition between reference UE and TRPs may be violated. This requires a correction of the position of the reference UEs, and some effort to determine their new true coordinates.

2). Transceiver architectures:

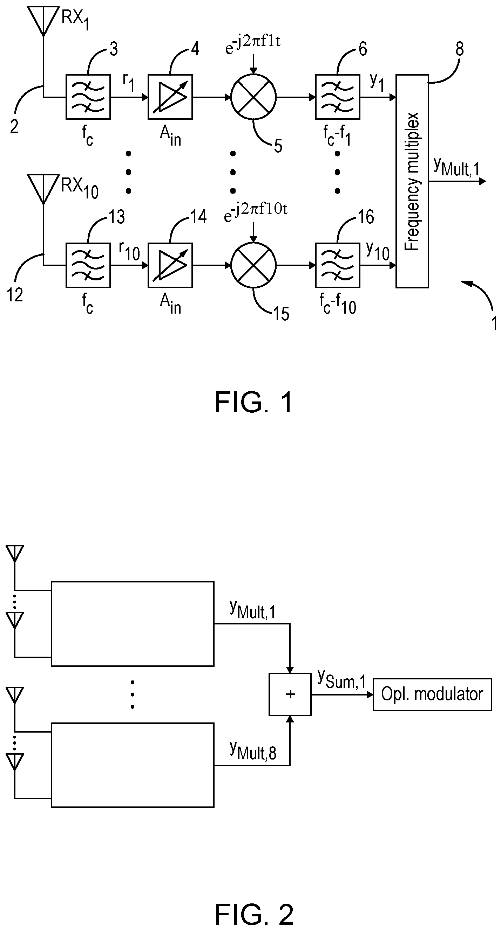

The architecture here is tailored to measure a large amount of antenna signals. FIG. 1 shows that the antenna signals are mixed to orthogonal intermediate frequencies and added in the analogue domain. The multiplexed signal is then sent over an optical backhaul to a central processing unit (FIG. 2) equipped with one single ADC. This allows to inherently synchronize antennas and their timings. Yet, the invention does not solve the issue of calibrating the different receiver/transmitter chains to achieve physical phases, as for massive MIMO only a relative information is used and the channel reciprocity is explained. E.g. if there are internal delays and calibration issues the precoder accumulates them in the channel (and does not separate as may be desired) and then uses the impaired response to communicate. Further the required signaling to and from the TRP is not thought off.

Example embodiments of the invention work to develop a cost-attractive solution for indoor positioning Basic idea of this invention includes novel TRP hardware architecture, methods, and procedures to inherently calibrate among different distributed TRPs. In particular there is focus on the problem of synchronizing many distributed TRPs without any additional external calibration, i.e., to avoid unknown timing offsets between TRPs. For this purpose there is splitting the logical entity of a TRP into two spatially separated physical units:

- A remote unit, in the following referred to as Remote TRP Unit (RTU). In contrast it is assumes many distributed RTUs in the area of interest:

  ◦ In one preferred embodiment the RTU consists solely of analogue signal processing; and

- A central unit with all required remaining signal processing to determine ToA and AoA for all logical TRPs.

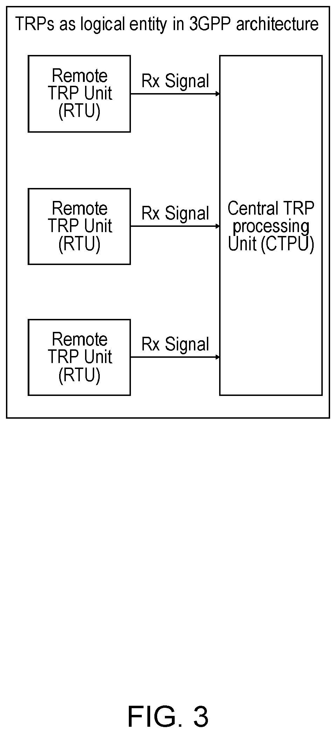

Based on this idea there is further proposed to integrate the central units of many TRPs into one single physical entity, in the following referred to as Central TRP processing Unit (CTPU). This architecture is illustrated in FIG. 3. RTUs and CTPU are connected through optical backhaul. Ideally the fiber length is known, and the propagation delay on the fiber does not change over time a there is expected significant temperature changes in an indoor deployment.

In particular, it is proposed that the sampling of the analogue signals from the RTUs is done centrally at the CTPU to ensure synchronicity between all logical TRPs. As these ADCs are collocated, they can be controlled by one central clock. This eliminates the need for White Rabbit synchronization between the TRPs.

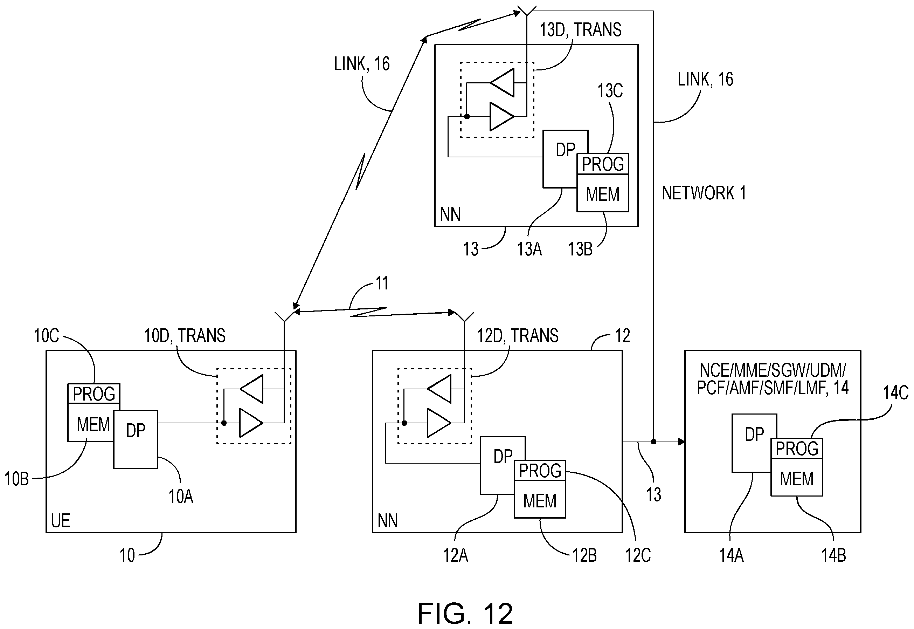

Before describing the example embodiments of the invention in detail, reference is made to FIG. 12 for illustrating a simplified block diagram of various electronic devices that are suitable for use in practicing the example embodiments of this invention.

FIG. 12 shows a block diagram of one possible and non-limiting exemplary system in which the example embodiments of the invention may be practiced. In FIG. 12, a user equipment (LTE) 10 is in wireless communication with a wireless network 1 or network, 1 as in FIG. 12. The wireless network 1 or network 1 as in FIG. 12 can comprise a communication network such as a mobile network e.g., the mobile network 1 or first mobile network as disclosed herein. Any reference herein to a wireless network 1 as in FIG. 12 can be seen as a reference to any wireless network as disclosed herein. Further, the wireless network 1 as in FIG. 12 can also comprises hardwired features as may be required by a communication network. A UE is a wireless, typically mobile device that can access a wireless network. The UE, for example, may be a mobile phone (or called a "cellular" phone) and/or a computer with a mobile terminal function. For example, the UE or mobile terminal may also be a portable, pocket, handheld, computer-embedded or vehicle-mounted mobile device and performs a language signaling and/or data exchange with the RAN.

The UE 10 includes one or more processors DP 10A, one or more memories MEM 10B, and one or more transceivers TRANS 10D interconnected through one or more buses. Each of the one or more transceivers TRANS 10D includes a receiver and a transmitter. The one or more buses may be address, data, or control buses, and may include any interconnection mechanism, such as a series of lines on a motherboard or integrated circuit, fiber optics or other optical communication equipment, and the like. The one or more transceivers TRANS 10D which can be optionally connected to one or more antennas for communication to NN 12 and NN 13, respectively. The one or more memories MEM 10B include computer program code PROG 10C. The UE 10 communicates with NN 12 and/or NN 13 via a wireless link 11 or 16.

The NN 12 (NR/5G Node B, an evolved NB, or LTE device) is a network node such as a master or secondary node base station (e.g., for NR or LTE long term evolution) that communicates with devices such as NN 13 and LTE 10 of FIG. 12. The NN 12 provides access to wireless devices such as the UE 10 to the wireless network 1. The NN 12 includes one or more processors DP 12A, one or more memories MEM 12B, and one or more transceivers TRANS 12D interconnected through one or more buses. In accordance with the example embodiments these TRANS 12D can include X2 and/or Xn interfaces for use to perform the example embodiments of the invention. Each of the one or more transceivers TRANS 12D includes a receiver and a transmitter. The one or more transceivers TRANS 12D can be optionally connected to one or more antennas for communication over at least link 11 with the UE 10. The one or more memories MEM 12B and the computer program code PROG 12C are configured to cause, with the one or more processors DP 12A, the NN 12 to perform one or more of the operations as described herein. The NN 12 may communicate with another gNB or eNB, or a device such as the NN 13 such as via link 16. Further, the link 11, link 16 and/or any other link may be wired or wireless or both and may implement, e.g., an X2 or Xn interface. Further the link 11 and/or link 16 may be through other network devices such as, but not limited to an NCE/MME/SGW/UDM/PCF/AMF/SMF/LMF 14 device as in FIG. 12. The NN 12 may perform functionalities of an MME (Mobility Management Entity) or SGW (Serving Gateway), such as a User Plane Functionality, and/or an Access Management functionality for LTE and similar functionality for 5G.

The NN 13 can be associated with a mobility function device such as an AMF or SMF, further the NN 13 may comprise a NR/5G Node B or possibly an evolved NB a base station such as a master or secondary node base station (e.g., for NR or LTE long term evolution) that communicates with devices such as the NN 12 and/or LTE 10 and/or the wireless network 1. The NN 13 includes one or more processors DP 13A, one or more memories MEM 13B, one or more network interfaces, and one or more transceivers TRANS 13D interconnected through one or more buses. In accordance with the example embodiments these network interfaces of NN 13 can include X2 and/or Xn interfaces for use to perform the example embodiments of the invention. Each of the one or more transceivers TRANS 13D includes a receiver and a transmitter that can optionally be connected to one or more antennas. The one or more memories MEM 13B include computer program code PROG 13C. For instance, the one or more memories MEM 13B and the computer program code PROG 13C are configured to cause, with the one or more processors DP 13A, the NN 13 to perform one or more of the operations as described herein. The NN 13 may communicate with another mobility function device and/or eNB such as the NN 12 and the UE 10 or any other device using, e.g., link 11 or link 16 or another link. The Link 16 as shown in FIG. 12 can be used for communication between the NN12 and the NN13. These links maybe wired or wireless or both and may implement, e.g., an X2 or Xn interface. Further, as stated above the link 11 and/or link 16 may be through other network devices such as, but not limited to an NCE/MME/SGW device such as the NCE/MME/SGW/UDM/PCF/AMF/SMF/LMF 14 of FIG. 12.

The one or more buses of the device of FIG. 12 may be address, data, or control buses, and may include any interconnection mechanism, such as a series of lines on a motherboard or integrated circuit, fiber optics or other optical communication equipment, wireless channels, and the like. For example, the one or more transceivers TRANS 12D, TRANS 13D and/or TRANS 10D may be implemented as a remote radio head (RRH), with the other elements of the NN 12 being physically in a different location from the RRH, and these devices can include one or more buses that could be implemented in part as fiber optic cable to connect the other elements of the NN 12 to a RRH.

It is noted that although FIG. 12 shows a network nodes such as NN 12 and NN 13, any of these nodes may can incorporate or be incorporated into an eNodeB or eNB or gNB such as for LTE and NR, and would still be configurable to perform example embodiments of the invention.

Also it is noted that description herein indicates that "cells" perform functions, but it should be clear that the gNB that forms the cell and/or a user equipment and/or mobility management function device that will perform the functions. In addition, the cell makes up part of a gNB, and there can be multiple cells per gNB.

The wireless network 1 or any network it can represent may or may not include a NCE/MME/SGW/UDM/PCF/AMF/SMF/LMF 14 that may include (NCE) network control element functionality, MME (Mobility Management Entity)/SGW (Serving Gateway) functionality, and/or serving gateway (SGW), and/or MME (Mobility Management Entity) and/or SGW (Serving Gateway) functionality, and/or user data management functionality (UDM), and/or PCF (Policy Control) functionality, and/or Access and Mobility Management Function (AMF) functionality, and/or Session Management (SMF) functionality, and/or Location Management Function (LMF), and/or Authentication Server (AUSF) functionality and which provides connectivity with a further network, such as a telephone network and/or a data communications network (e.g., the Internet), and which is configured to perform any 5G and/or NR operations in addition to or instead of other standard operations at the time of this application. The NCE/MME/SGW/UDM/PCF/AMF/SMF/LMF 14 is configurable to perform operations in accordance with example embodiments of the invention in any of an LTE, NR, 5G and/or any standards based communication technologies being performed or discussed at the time of this application. In addition, it is noted that the operations in accordance with example embodiments of the invention, as performed by the NN 12 and/or NN 13, may also be performed at the NCE/MME/SGW/UDM/PCF/AMF/SMF/LMF 14.

The NCE/MME/SGW/UDM/PCF/AMF/SMF/LMF 14 includes one or more processors DP 14A, one or more memories MEM 14B, and one or more network interfaces (N/W I/F(s)), interconnected through one or more buses coupled with the link 13 and/or link 16. In accordance with the example embodiments these network interfaces can include X2 and/or Xn interfaces for use to perform the example embodiments of the invention. The one or more memories MEM 14B include computer program code PROG 14C. The one or more memories MEM14B and the computer program code PROG 14C are configured to, with the one or more processors DP 14A, cause the NCE/MME/SGW/UDM/PCF/AMF/SMF/LMF 14 to perform one or more operations which may be needed to support the operations in accordance with the example embodiments of the invention.

It is noted that that the NN 12 and/or NN 13 and/or UE 10 can be configured (e.g. based on standards implementations etc.) to perform functionality of a Location Management Function (LMF). The LMF functionality may be embodied in either of the Content Consumer A, Content Consumer B, Dash Server, and/or Content Provider or may be part of these network devices or other devices associated with these devices. In addition, an LMF such as the LMF of the MME/SGW/UDM/PCF/AMF/SMF/LMF 14 of FIG. 12, as at least described below, can be co-located with UE 10 such as to be separate from the NN 12 and/or NN 13 of FIG. 12 for performing operations in accordance with example embodiments of the invention as disclosed herein.

The wireless Network 1 may implement network virtualization, which is the process of combining hardware and software network resources and network functionality into a single, software-based administrative entity, a virtual network. Network virtualization involves platform virtualization, often combined with resource virtualization. Network virtualization is categorized as either external, combining many networks, or parts of networks, into a virtual unit, or internal, providing network-like functionality to software containers on a single system. Note that the virtualized entities that result from the network virtualization are still implemented, at some level, using hardware such as processors DP10, DP12A, DP13A, and/or DP14A and memories MEM 10B, MEM 12B, MEM 13B, and/or MEM 14B, and also such virtualized entities create technical effects.

The computer readable memories MEM 12B, MEM 13B, and MEM 14B may be of any type suitable to the local technical environment and may be implemented using any suitable data storage technology, such as semiconductor based memory devices, flash memory, magnetic memory devices and systems, optical memory devices and systems, fixed memory and removable memory. The computer readable memories MEM 12B, MEM 13B, and MEM 14B may be means for performing storage functions. The processors DP10, DP12A, DP13A, and DP14A may be of any type suitable to the local technical environment, and may include one or more of general purpose computers, special purpose computers, microprocessors, digital signal processors (DSPs) and processors based on a multi-core processor architecture, as non-limiting examples. The processors DP10, DP12A, DP13A, and DP14A may be means for performing functions, such as controlling the UE 10, NN 12, NN 13, and other functions as described herein.

As similarly stated above, example embodiments of the invention work to integrate the central units of many TRPs into one single physical entity, in the following referred to as Central TRP processing Unit (CTPU). This architecture is illustrated in FIG. 3. RTUs and CTPU are connected through optical backhaul. Ideally the fiber length is known, and the propagation delay on the fiber does not change over time as there can be expected significant temperature changes in an indoor deployment.

In particular, it is proposed that the sampling of the analogue signals from the RTUs is done centrally at the CTPU to ensure synchronicity between all logical TRPs. As these ADCs are collocated, they can be controlled by one central clock. This eliminates the need for White Rabbit synchronization between the TRPs.

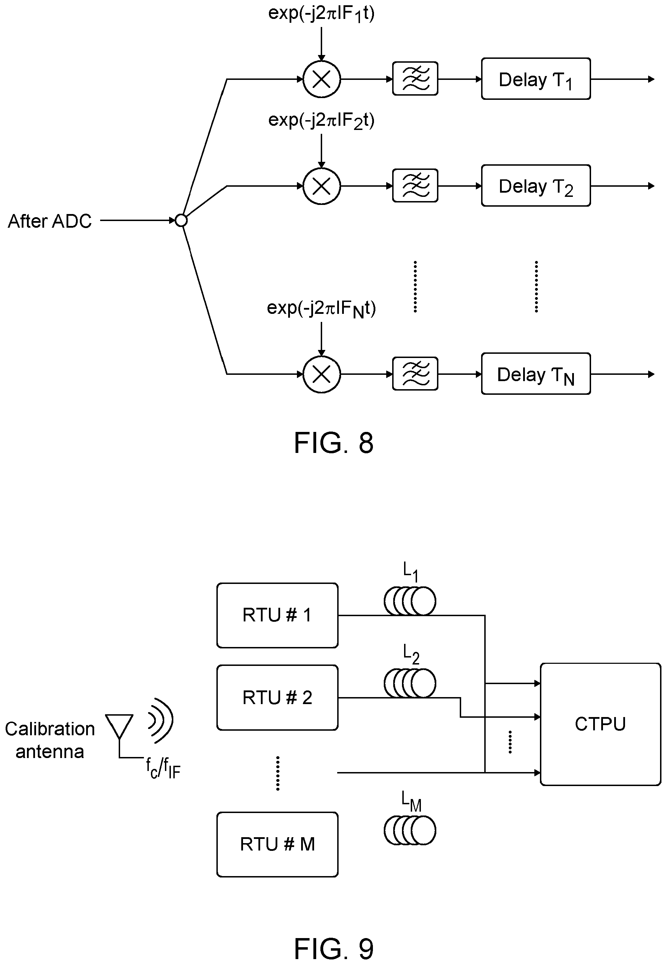

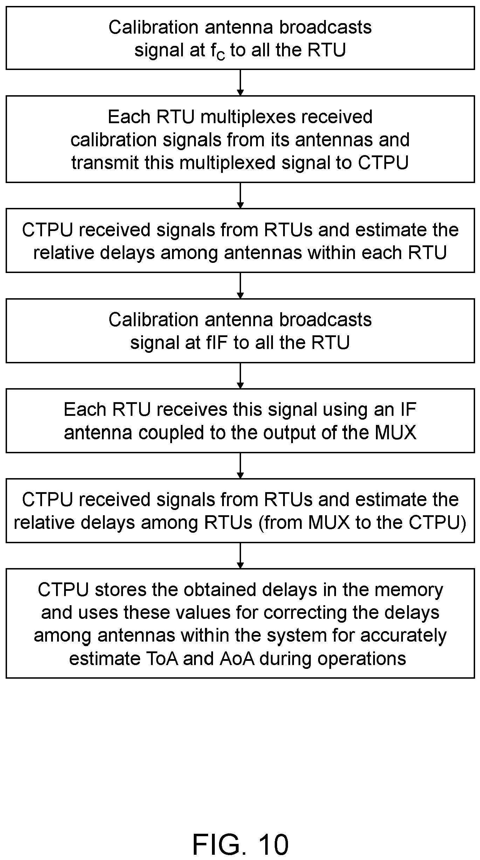

Furthermore there is proposed a two-stage calibration method to estimate the propagation delays between the antennas of one RTU and the path delays between all RTUs and the CTPU (detailed description see FIG. 9 and FIG. 10). This simple calibration scheme is possible due to the known positions of the RTUs and the broadcasting calibration antenna. In this case, there is no need for separate measurements of the fiber lengths of the optical backhaul. One should note that the calibration task is needed in the system setup phase only or when a major change occurs such as introduction of a new RTU.

In the conventional prior art TRP the complete analogue and digital signal processing to estimate ToA and AoA is implemented in one single physical entity, which must be a remote unit. This means it must include respective processing capabilities. For the split architecture there is proposed a control system in the CTPU which selects a subset of available RTU signals for further processing. Depending on the position of the target UE, only some of the RTUs can do meaningful measurements. An indication if a RTU signal is meaningful can be the power of the signal or a previously estimated position of the target UE. The further processing to estimate the position of the target UE is limited to the selected subset of RTUs. An important benefit of this approach is higher accuracy in localization with lower total computing power to obtain the location estimate.

Assuming a factory hall of 100 m x 100 m and an inter-site-distance of 20 m, 25 TRPs must be deployed. In one proof-of-concept in the ARENA2036 there is shown that the 6 closest TRPs are sufficient to estimate the position of the target UE with an accuracy of 50 cm. With the split TRP approach the computing capacity in the CTPU can be dimensioned accordingly, whereas in the conventional solution all 25 TRPs must be capable to do the signal processing.

Furthermore, the central processing in the CTPU enables synergy effects like pipeline processing of the signals from several RTUs. Consequently, the overall hardware cost for the split TRP architecture is less than the sum of the cost for conventional TRPs. This is the second source to reduce the overall cost of the deployment beyond the avoidance of White Rabbit.

List of features and detailed implementation examples in accordance with example embodiments of the invention are described herein:

- New TRP hardware architecture (consisting of distributed RTUs and centralized CTPU) decreasing HW and setup cost and increasing scalability;

- Digitization of the received signals from all RTUs at the CTPU using an array of synchronized ADCs (one or even more ADC per RTU) driven by a common clock;

- A method for calibrating the propagation delay from RTUs to CTPU. This single-shot calibration is required when the system is setup or when a major change occurs (e. g. a new RTU is added);

- A method for extracting time difference of arrival and angle of arrival from the received RTU signals; and

- A localization method where the processing is centralized at the CTPU and the CTPU selects only a subset of RTUs for processing for minimizing the computing power and/or hardware resources

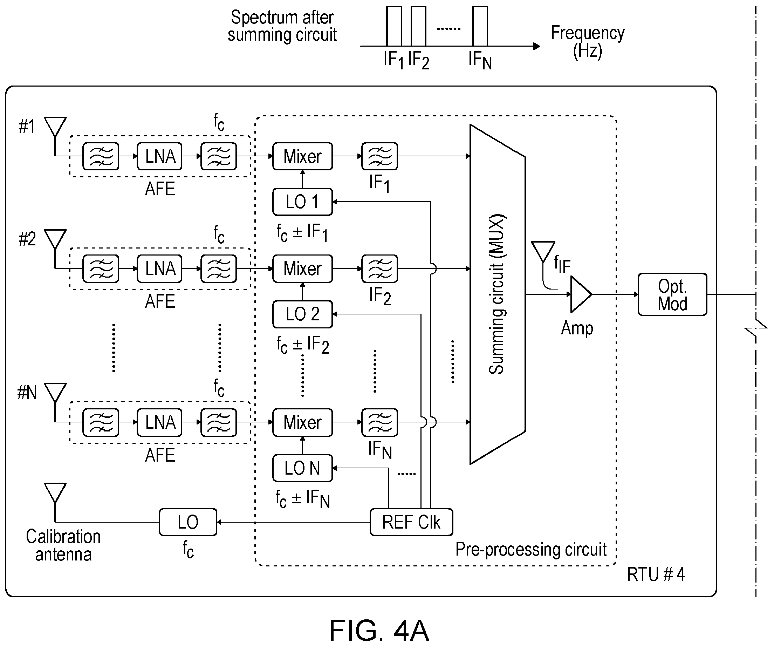

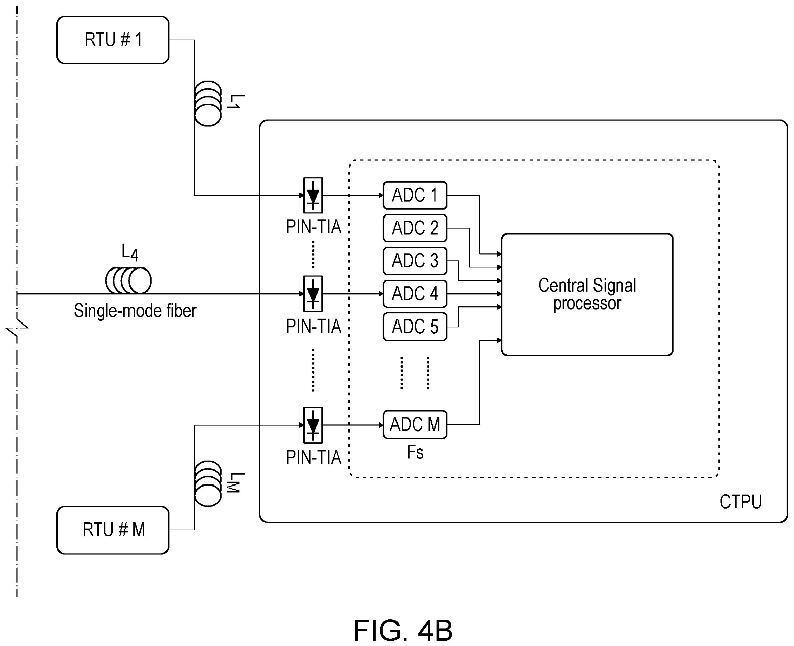

Further, here is described one implementation option in detail. The architecture consisting of RTU and CTPU is shown in FIG. 4. Each RTU consists of N antenna elements, the carrier frequency is $f_c$, for example 3.5 GHz. M RTUs are connected to one CTPU through single-mode fibers with lengths of $L_1$, $L_2$, ...$L_M$ respectively. At a RTU, received signals are processed in the analog domain as follows:

- Filtering and amplification of each antenna signal with a low-noise amplifier (LNA) is done in the analogue frontend (AFE);

- With the pre-processing circuit each antenna signal is mixed down to an individual intermediate frequency, $IF_i$, i = 1, 2,...N. The intermediate frequency bands don't overlap with each other;

- Local oscillators (LO) are triggered by a reference clock (REF Clk).

- After further filtering the non-overlapping antenna signals are summed up. This is equivalent to frequency multiplexing; and

- After amplification of the sum signal, an optical modulator such as a distributed feedback laser diode (DFB) translates the electrical signal into the optical domain

Digitalization and baseband processing of selected RTU signals in the CTPU:

- A photodiode with transimpedance amplifier (TIA) translates the optical signal back in the electrical domain;

- The signals from all RTUs are digitized centrally in an analogue to digital conversion (ADC) block. Synchronization is achieved through identical pre-processing in all RTU, identical (or at least well known) fiber length between each RTU and the CTPU, no significant temperature differences within the set of RTUs and within the set of fibers due to the indoor deployment, consolidated sampling controlled by central clock of all signals in the ADC block;

- Digital down conversion to the baseband (not shown in FIG. 4); and

- Baseband processing to estimate the ToA and the AoA of the uplink signal received at each RTU antenna array. This is not further detailed here as it is not part of the invention.

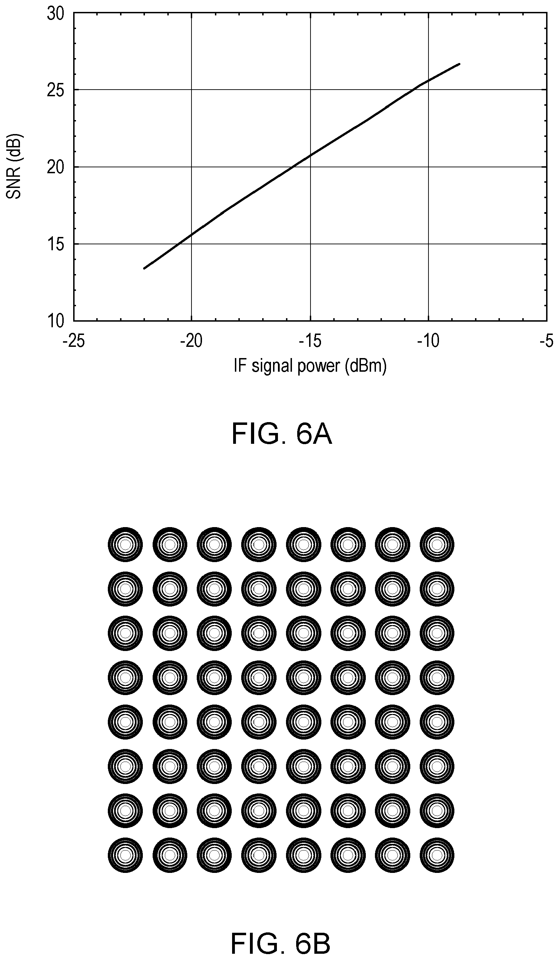

For the proposed scheme, a high signal quality after fiber transmission is crucial for accurate estimations of ToA and AoA at the CTPU. In general, the SNR after the fiber transmission depends on the drive IF signal power. One example is depicted in FIG. 6a, which shows the SNR of a RoF system with an aggregated radio bandwidth of 800 MHz (equivalent to 8x100 MHz). At a -10 dBm of IF power, a SNR over 25 dB was observed, which guarantees accurate ToA and AoA estimations at the CTPU. For the illustration purpose, a 64 QAM constellation is shown in FIG. 6b at IF power of -10 dBm.

For localization using ToA, the propagation delay from each RTU to CTPU should be known at the CTPU or the LMF. Denoting the propagation delay from kth RTU to CTPU by Dk, k = 1, 2, ...M, there is:

$$D_k = \frac{L_k}{c},$$

where c is the group velocity of the lightwave on the fiber. One option is to use known fiber lengths to connect RTUs to the CTPU or measuring each fiber length accurately. In this case, the propagation delays from RTUs to CTPU are known. These delays are used within the CTPU for localization using ToA.

For estimating accurately the AoA for each RTU, the relative delays (skew) between N antenna elements within that RTU should also be measured with a high accuracy. Two possible calibration techniques are:

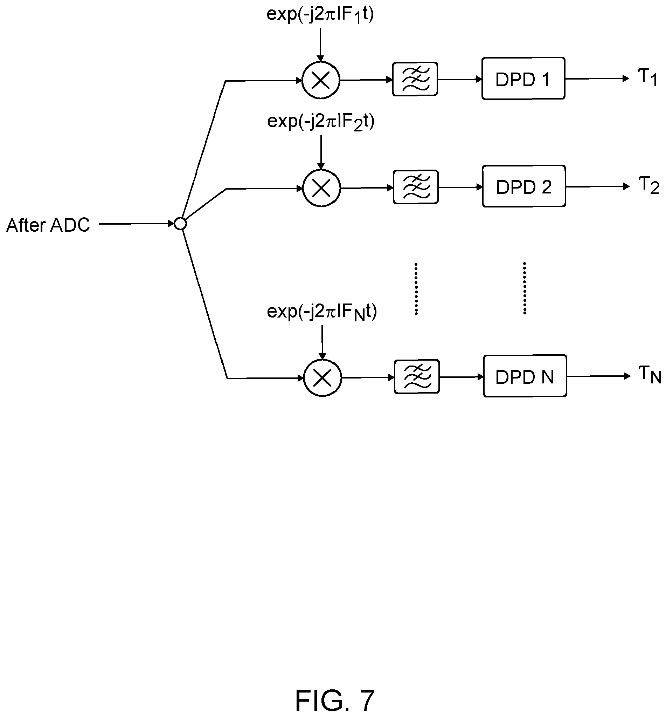

- As shown in FIG 4, a calibration antenna at a known position broadcasts a tone at $f_c$ to the N antennas. The received signals then go through the analog pre-processing circuit and subsequently get transported to the CTPU. At the CTPU, this signal is digitized at ADC and delay offsets between antennas are estimated using an array of digital phase detector (DPD) as shown in FIG. 7. These values are stored in memory for table lookup for correction during operation (FIG. 8); and

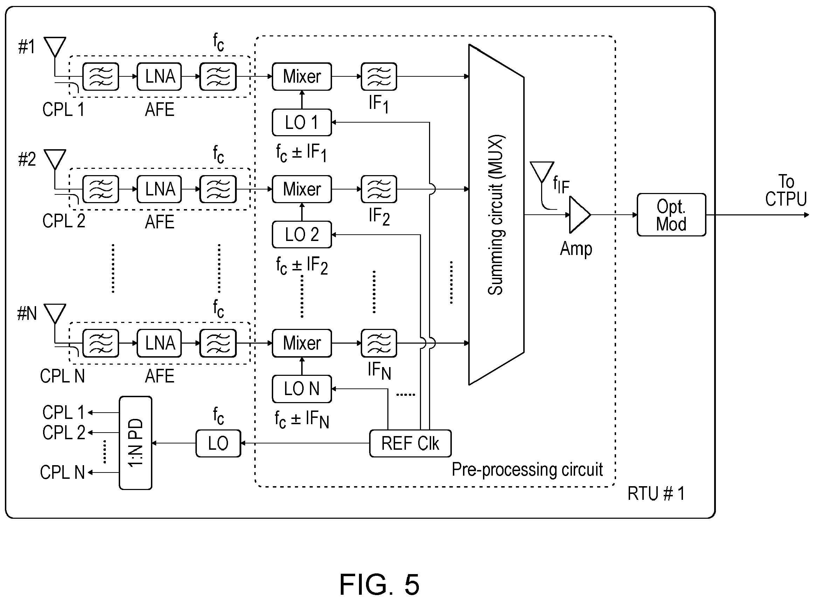

- As shown in FIG 5, a tone at $f_c$ is divided into N copies and distributed with controlled path lengths to N antennas using N directional couplers (CPL 1, CPL 2,...CPL N ). These components to be incorporated to the main board. The received signals then go through the analog pre-processing circuit and subsequently transported to the CTPU. At the CTPU, this signal is digitized at ADC and delay offsets between antennas are estimated using an array of digital phase detector (DPD) as shown in FIG. 7. These values are stored in memory for table lookup for correction during operation (FIG. 8).

Another calibration scheme is to use a calibration antenna at $f_c/f_{IF}$ (e. g. using a dual-band antenna or two separate antennas at $f_c$ and $f_{IF}$) at a known position for calibrating the propagation delays from all antenna elements in the system to the CTPU (Fig. 9).This simple calibration scheme is possible due to the known positions of RTUs. In this case, there is no need for separate measurements of the fiber lengths. The system calibration antenna can be included in one RTU as illustrated in FIG. 4 (only antenna at $f_c$ is shown). One should note that the calibration task is needed in the system setup phase only or when a major change occurs such as introduction of a new RTU.

FIG. 10 shows a flow chart for the two-stage calibration process using calibration antenna(s) at fc/fIF as illustrated in FIG. 9. The $f_c$ antenna is used for calibrating the delays among elements within an RTU and the $f_{IF}$ antenna is used for calibrating the delays among RTU (after MUX to the CTPU). These two stages of calibration are interchangeable.

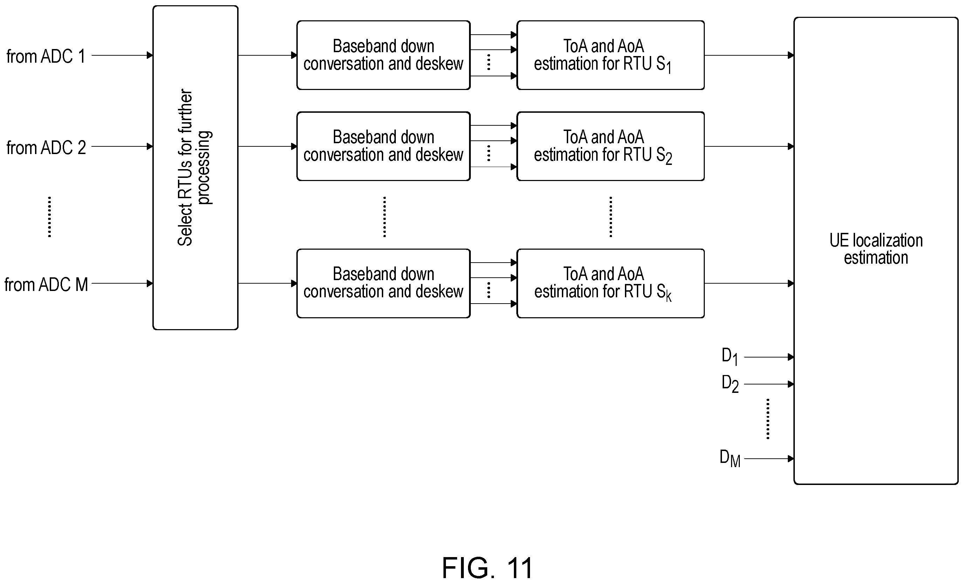

A simplified block diagram of the central signal processing in CTPU is shown in FIG. 11. First, the CTPU select k RTUs (RTU $S_1$, $S_2$, ...$S_k$) where k is smaller or equal to M to process based on their importance in localizing the LTE position. As mentioned before, an indication if a RTU signal is meaningful can be the power of the signal or a previously estimated position of the target UE The aggregated IF signals from each selected RTU are digitally down converted to the baseband and deskewed. After that, baseband processing is performed to estimate the ToA and the AoA of the uplink signal received at each selected RTU antenna array. The CTPU then uses these estimations and stored delay values from the calibration task to estimate the UE position.

In summary, the major benefits of the proposals is the low total cost of the solution when taking into account the cost of both RTUs and CTPU because of (a) removal of IEEE White Rabbit (b) lower cost of transport components (c) lower aggregated centralized processing cost.

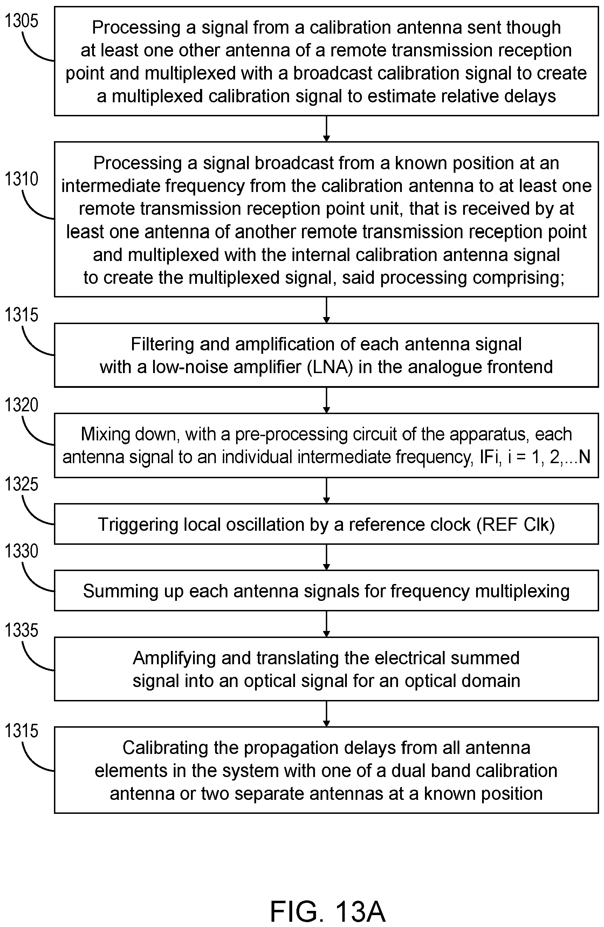

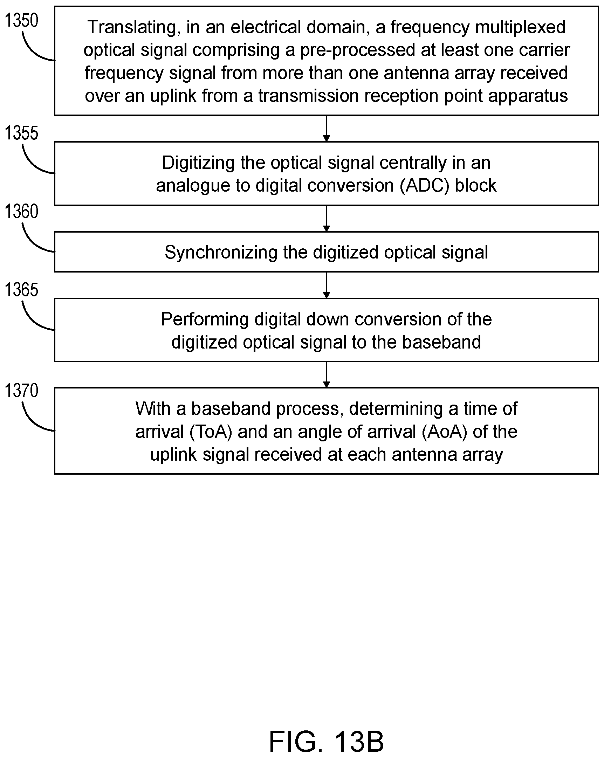

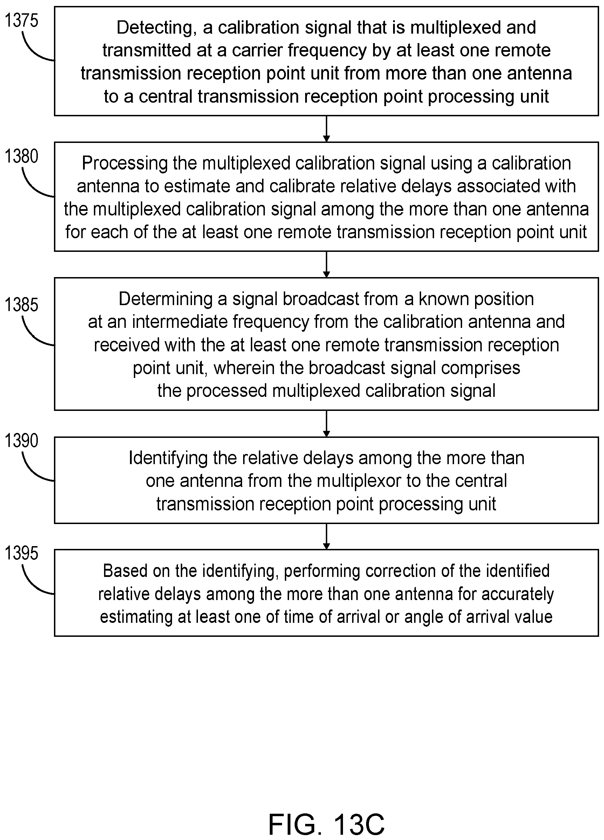

FIG. 13A illustrates operations which may be performed by a device such as, but not limited to a transmission reception point apparatus, a device (e.g., UE 10 as in FIG. 13). As shown in step 1305 there is processing a signal from a calibration antenna sent though at least one other antenna of a remote transmission reception point and multiplexed with a broadcast calibration signal to create a multiplexed calibration signal to estimate relative delays. As shown in step 1310 of FIG. 13A there is processing a signal broadcast from a known position at an intermediate frequency from the calibration antenna to at least one remote transmission reception point unit, that is received by at least one antenna of another remote transmission reception point and multiplexed with the internal calibration antenna signal to create the multiplexed signal, said processing comprising. As shown in step 1315 of FIG. 13A there is filtering and amplification of each antenna signal with a low-noise amplifier (LNA) in the analogue frontend. As shown in step 1320 of FIG. 13A there is mixing down, with a pre-processing circuit of the apparatus, each antenna signal to an individual intermediate frequency, IFi, i = 1, 2,...N. As shown in step 1325 of FIG. 13A there is triggering local oscillation by a reference clock (REF Clk). As shown in step 1330 of FIG. 13A there is summing up each antenna signals for frequency multiplexing; As shown in step 1335 of FIG. 13A there is amplifying and translating the electrical summed signal into an optical signal for an optical domain. Then as shown in step 1340 of FIG. 13A there is calibrating the propagation delays from all antenna elements in the system with one of a dual band calibration antenna or two separate antennas at a known position.

In accordance with the example embodiments as described in the paragraph above, wherein the mixing down each antenna signal to an individual intermediate frequency, IFi, i = 1, 2,...N is performed so that intermediate frequency bands of the at least one carrier frequency signal do not overlap with each other.

In accordance with the example embodiments as described in the paragraphs above, wherein the pre-processed at least one carrier frequency signal is divided into N copies, and wherein the N copies are distributed with controlled path lengths to N antennas using N directional couplers (CPL 1, CPL 2,...CPL N ) for transporting the optical signal to a central processing unit apparatus associated with the communication network.

In accordance with the example embodiments as described in the paragraphs above, wherein after multiplexing the antenna signals at least one of the internal calibration antenna signal is used for calibrating the delays among elements within the at least one remote transmission reception point or a known location antenna signal is used for calibrating the delays among the at least one remote transmission reception point.

In accordance with the example embodiments as described in the paragraphs above, wherein the translating comprises synchronization is achieved with identical pre-processing in the more than one transmission reception point apparatus.

In accordance with the example embodiments as described in the paragraphs above, wherein the identical pre-processing is based on known or identical fiber lengths between each of the more than one transmission reception point apparatus and the central processing unit apparatus, no significant temperature differences within a set of the more than one transmission reception point and within a set of fibers due to the indoor deployment, and consolidated sampling controlled by reference clock of all signals in a analog to digital converter block.

In accordance with the example embodiments as described in the paragraphs above, wherein the creating the multiplexed calibration signal to estimate relative delays comprises: filtering and amplification of a signal at the more than one antenna with a low-noise amplifier in an analogue frontend.

In accordance with the example embodiments as described in the paragraphs above, wherein the creating the multiplexed calibration signal to estimate relative delays comprises: the signal is mixed down with a pre-processing circuit to an antenna-individual intermediate frequency such that intermediate frequency bands don't overlap with each other.

In accordance with the example embodiments as described in the paragraphs above, wherein the correction of the identified relative delays comprises: further filtering and summing up non-overlapping antenna signals to be equivalent to frequency multiplexing; and after amplification of the summed signals, an optical modulator comprising a distributed feedback laser diode translates the broadcast signal into an optical domain.

A non-transitory computer-readable medium (MEM 10B as in FIG. 12) storing program code (PROG 10C as in FIG. 12), the program code executed by at least one processor (DP 10A as in FIG. 12) to perform the operations as at least described in the paragraphs above.

In accordance with an example embodiment of the invention as described above there is an apparatus comprising: means for processing (TRANS 10D, MEM 10B, PROG 10C, and DP 10A as in FIG. 12) a signal from a calibration antenna sent though at least one other antenna of a remote transmission reception point and multiplexed with a broadcast calibration signal to create a multiplexed calibration signal to estimate relative delays; means for processing (TRANS 10D, MEM 10B, PROG 10C, and DP 10A as in FIG. 12) a signal broadcast from a known position at an intermediate frequency from the calibration antenna to at least one remote transmission reception point unit, that is received by at least one antenna of another remote transmission reception point and multiplexed with the internal calibration antenna signal to create the multiplexed signal, said processing comprising; means for filtering and amplification (TRANS 10D, MEM 10B, PROG 10C, and DP 10A as in FIG. 12) of each antenna signal with a low-noise amplifier (LNA) in the analogue frontend; means for mixing down (TRANS 10D, MEM 10B, PROG 10C, and DP 10A as in FIG. 12), with a pre-processing circuit of the apparatus, each antenna signal to an individual intermediate frequency, IFi, i = 1, 2,...N; means for triggering (TRANS 10D, MEM 10B, PROG 10C, and DP 10A as in FIG. 12) local oscillation by a reference clock (REF Clk); means for summing up each antenna signals for frequency multiplexing; and means for amplifying and means for translating (TRANS 10D, MEM 10B, PROG 10C, and DP 10A as in FIG. 12) the electrical summed signal into an optical signal for an optical domain; and means for calibrating (TRANS 10D, MEM 10B, PROG 10C, and DP 10A as in FIG. 12) the propagation delays from all antenna elements in the system with one of a dual band calibration antenna or two separate antennas at a known position.

In accordance with the example embodiments as described in the paragraph above, at least the means for processing, filtering, mixing down, triggering, amplifying, translating, and calibrating comprises a non-transitory computer readable medium [MEM 10B as in FIG. 12] encoded with a computer program [PROG 10C as in FIG. 12] executable by at least one processor [DP 10A as in FIG. 12].

FIG. 13B illustrates operations which may be performed by a device such as, but not limited to, a central processing unit apparatus (e.g., the NN 12 and/or NN 13 as in FIG. 13). As shown in step 1350 there is translating, in an electrical domain, a frequency multiplexed optical signal comprising a pre-processed at least one carrier frequency signal from more than one antenna array received over an uplink from a transmission reception point apparatus. As shown in step 1355 of FIG. 13B there is digitizing the optical signal centrally in an analogue to digital conversion (ADC) block. As shown in step 1360 of FIG. 13B there is synchronizing the digitized optical signal. As shown in step 1365 of FIG. 13B there is performing digital down conversion of the digitized optical signal to the baseband. Then as shown in step 1370 of FIG. 13B there is, with a baseband process, determining a time of arrival (ToA) and an angle of arrival (AoA) of the uplink signal received at each antenna array.

In accordance with the example embodiments as described in the paragraphs above, wherein the at least one non-transitory memory and the computer program code are configured with the at least one processor to cause the apparatus to at least: synchronize the digitized optical signal comprising processing a multiplexed calibration signal using a calibration antenna to estimate and calibrate relative delays associated with the multiplexed signal among each antenna array for the more than one transmission reception point apparatus; identify the relative delays from the multiplexor to the central transmission reception point processing unit; and based on the identifying, perform correction of the identified relative delays among the more than one antenna.

In accordance with the example embodiments as described in the paragraphs above, wherein processing the multiplexed calibration signal to estimate and calibrate relative delays associated with the multiplexed signal comprises: filtering and amplification of a signal at the more than one antenna with a low-noise amplifier in an analogue frontend.

In accordance with the example embodiments as described in the paragraphs above, wherein processing the multiplexed calibration signal to estimate and calibrate relative delays associated with the multiplexed signal comprises: the signal is mixed down with a pre-processing circuit to an antenna-individual intermediate frequency such that intermediate frequency bands don't overlap with each other.

In accordance with the example embodiments as described in the paragraphs above, wherein the correction of the identified relative delays comprises: further filtering and summing up non-overlapping antenna signals to be equivalent to frequency multiplexing; and after amplification of the summed signals, an optical modulator comprising a distributed feedback laser diode translates the broadcast signal into an optical domain.

In accordance with the example embodiments as described in the paragraphs above, wherein values comprising delay offsets between the more than one antenna estimated using an array of digital phase detectors (DPD).

In accordance with the example embodiments as described in the paragraphs above, wherein the values are stored in memory for table lookup for correction during operation.

In accordance with the example embodiments as described in the paragraphs above, wherein the correction of the identified relative delays among the more than one antenna is performed for accurately estimating at least one of the time of arrival or angle of arrival value coordinates of the uplink signal received at each antenna array.

In accordance with the example embodiments as described in the paragraphs above, wherein processing the multiplexed calibration signal comprises: a photodiode with transimpedance amplifier translates an optical signal back in an electrical domain; digitalization and baseband processing of selected ones of the at least one remote transmission reception point unit signals in the central transmission reception point processing unit; signals from all the at least one remote transmission reception point unit are digitized centrally in an analogue to digital conversion block, wherein synchronization is achieved through identical pre-processing in all the at least one remote transmission reception point unit; and known or identical fiber lengths between the at least one remote transmission reception point unit and the central transmission reception point processing unit, no significant temperature differences within the set of the at least one remote transmission reception point unit and within the set of fibers due to the indoor deployment, consolidated sampling controlled by central clock of all signals in the analog to digital conversion block.

In accordance with the example embodiments as described in the paragraphs above, wherein the identical pre-processing is based on known or identical fiber lengths between each of the more than one transmission reception point apparatus and the central processing unit apparatus, no significant temperature differences within a set of the more than one transmission reception point and within a set of fibers due to the indoor deployment, and consolidated sampling controlled by central clock of all signals in a analog to digital converter block.

In accordance with the example embodiments as described in the paragraphs above, wherein processing the multiplexed calibration signal comprises a localization method where the processing is centralized at the central transmission reception point processing unit and the central transmission reception point processing unit selects only a subset of the at least one remote transmission reception point unit for processing for minimizing the computing power and/or hardware resources.

In accordance with the example embodiments as described in the paragraphs above, wherein the localization method is using time of arrival, and a known propagation delay from each of the at least one remote transmission reception point unit.

In accordance with the example embodiments as described in the paragraphs above, wherein processing the multiplexed calibration signal comprises: identified relative delays are determined with the signal that is digitized and with delay offsets between antennas estimated using an array of digital phase detector (DPD), wherein the identified delays are sent towards the at least one remote transmission reception point unit and stored in memory for table lookup for the correcting.

In accordance with the example embodiments as described in the paragraphs above, wherein performing correction of the identified relative delays comprises: correcting delays among the more than one antenna using a tone at the carrier frequency from the calibration antenna, or correcting delays among the more than one antenna using a tone at the carrier frequency divided into more than one copy and distributed with controlled path lengths to the more than one antenna using more than one directional couplers.

In accordance with the example embodiments as described in the paragraphs above, wherein the frequency multiplexed optical signal is received from the calibration antenna.

In accordance with the example embodiments as described in the paragraphs above, wherein the calibration antenna comprises a dual band antenna or more than one separate antenna.

A non-transitory computer-readable medium (MEM 12B and/or MEM 13B as in FIG. 12) storing program code (PROG 12C and/or PROG 13C as in FIG. 12), the program code executed by at least one processor (DP 12A and/or DP 13A as in FIG. 12) to perform the operations as at least described in the paragraphs above.

In accordance with an example embodiment of the invention as described above there is an apparatus comprising: means for translating (TRANS 12D and/or TRANS 13D; MEM 12B and/or MEM 13B, PROG 12C and/or PROG 13C, and DP 12A and/or DP 13A as in FIG. 12), in an electrical domain, a frequency multiplexed optical signal comprising a pre-processed at least one carrier frequency signal from more than one antenna array received over an uplink from a transmission reception point apparatus; means for digitizing (TRANS 12D and/or TRANS 13D; MEM 12B and/or MEM 13B, PROG 12C and/or PROG 13C, and DP 12A and/or DP 13A as in FIG. 12) the optical signal centrally in an analogue to digital conversion (ADC) block; means for synchronizing (TRANS 12D and/or TRANS 13D; MEM 12B and/or MEM 13B, PROG 12C and/or PROG 13C, and DP 12A and/or DP 13A as in FIG. 12) the digitized optical signal; means for performing (TRANS 12D and/or TRANS 13D; MEM 12B and/or MEM 13B, PROG 12C and/or PROG 13C, and DP 12A and/or DP 13A as in FIG. 12) digital down conversion of the digitized optical signal to the baseband; then means, with a baseband process, for determining (TRANS 12D and/or TRANS 13D; MEM 12B and/or MEM 13B, PROG 12C and/or PROG 13C, and DP 12A and/or DP 13A as in FIG. 12) a time of arrival (ToA) and an angle of arrival (AoA) of the uplink signal received at each antenna array.

In the example aspect of the invention according to the paragraph above, wherein at least the means for translating, digitizing, synchronizing, performing, and determining comprises a non-transitory computer readable medium [MEM 12B and/or MEM 13B] encoded with a computer program [PROG 12C and/or PROG 13C] executable by at least one processor [DP 12A and/or DP 13A].

FIG. 13C illustrates operations which may be performed by a device such as, but not limited to, a device (e.g., the NN 12 and/or NN 13 as in FIG. 13C). As shown in step 1375 there is detecting, a calibration signal that is multiplexed and transmitted at a carrier frequency by at least one remote transmission reception point unit from more than one antenna to a central transmission reception point processing unit. As shown in step 1380 of FIG. 13C there is processing the multiplexed calibration signal using a calibration antenna to estimate and calibrate relative delays associated with the multiplexed calibration signal among the more than one antenna for each of the at least one remote transmission reception point unit. As shown in step 1385 of FIG. 13C there is determining a signal broadcast from a known position at an intermediate frequency from the calibration antenna and received with the at least one remote transmission reception point unit, wherein the broadcast signal comprises the processed multiplexed calibration signal. As shown in step 1390 of FIG. 13C there is identifying the relative delays among the more than one antenna from the multiplexor to the central transmission reception point processing unit. Then as shown in step 1395 of FIG. 13C there is, based on the identifying, performing correction of the identified relative delays among the more than one antenna for accurately estimating at least one of time of arrival or angle of arrival value coordinates.

In accordance with the example embodiments as described in the paragraph above, wherein the identified relative delays are stored in memory for table lookup for the correcting.

In accordance with the example embodiments as described in the paragraphs above, wherein the broadcast signal is received using an intermediate frequency antenna coupled to a multiplexor.

In accordance with the example embodiments as described in the paragraphs above, wherein the determining comprises the broadcast signal is digitized at an analog to digital converter and delay offsets between the more than one antenna are estimated using an array of digital phase detector.

In accordance with the example embodiments as described in the paragraphs above, wherein the determining comprises correcting delays among the more than one antenna using a tone at the carrier frequency from the calibration antenna, or correcting delays among the more than one antenna using a tone at the carrier frequency divided into more than one copy and distributed with controlled path lengths to the more than one antenna using more than one directional couplers.

In accordance with the example embodiments as described in the paragraphs above, wherein the correction of the identified relative delays comprises: filtering and amplification of the broadcast signal at the more than one antenna with a low-noise amplifier in an analogue frontend.

In accordance with the example embodiments as described in the paragraphs above, wherein the correction of the identified relative delays comprises: the broadcast signal is mixed down with a pre-processing circuit to an individual intermediate frequency such that intermediate frequency bands don't overlap with each other.

In accordance with the example embodiments as described in the paragraphs above, wherein the correction of the identified relative delays comprises: further filtering and summing up non-overlapping antenna signals are summed up to be equivalent to frequency multiplexing; and after amplification of the summed signals, an optical modulator comprising a distributed feedback laser diode translates the broadcast signal into an optical domain.

In accordance with the example embodiments as described in the paragraphs above, wherein processing the multiplexed calibration signal comprises: digitalization and baseband processing of selected ones of the at least one remote transmission reception point unit signals in the central transmission reception point processing unit, a photodiode with transimpedance amplifier translates an optical signal back in an electrical domain, signals from all the at least one remote transmission reception point unit are digitized centrally in an analogue to digital conversion block, wherein synchronization is achieved through identical pre-processing in all the at least one remote transmission reception point unit, identical fiber length between the at least one remote transmission reception point unit and the central transmission reception point processing unit, no significant temperature differences within the set of the at least one remote transmission reception point unit and within the set of fibers due to the indoor deployment, consolidated sampling controlled by central clock of all signals in the analog to digital conversion block.

In accordance with the example embodiments as described in the paragraphs above, wherein processing the multiplexed calibration signal comprises a localization method where the processing is centralized at the central transmission reception point processing unit and the central transmission reception point processing unit selects only a subset of the at least one remote transmission reception point unit for processing for minimizing the computing power and/or hardware resources.

In accordance with the example embodiments as described in the paragraphs above, wherein for localization method is using time of arrival, and a known propagation delay from the at least one remote transmission reception point unit to the central transmission reception point processing unit.

In accordance with the example embodiments as described in the paragraphs above, wherein the calibration antenna comprises a dual band antenna or more than one separate antenna.

A non-transitory computer-readable medium (MEM 12B and/or MEM 13B as in FIG. 12) storing program code (PROG 12C and/or PROG 13C as in FIG. 12), the program code executed by at least one processor (DP 12A and/or DP 13A as in FIG. 12) to perform the operations as at least described in the paragraphs above.

In accordance with an example embodiment of the invention as described above there is an apparatus comprising: means for detecting (TRANS 12D and/or TRANS 13D; MEM 12B and/or MEM 13B, PROG 12C and/or PROG 13C, and DP 12A and/or DP 13A as in FIG. 12), a calibration signal that is multiplexed and transmitted at a carrier frequency by at least one remote transmission reception point unit from more than one antenna to a central transmission reception point processing unit; means for processing (TRANS 12D and/or TRANS 13D; MEM 12B and/or MEM 13B, PROG 12C and/or PROG 13C, and DP 12A and/or DP 13A as in FIG. 12) the multiplexed calibration signal using a calibration antenna to estimate and calibrate relative delays associated with the multiplexed calibration signal among the more than one antenna for each of the at least one remote transmission reception point unit; means for determining (TRANS 12D and/or TRANS 13D; MEM 12B and/or MEM 13B, PROG 12C and/or PROG 13C, and DP 12A and/or DP 13A as in FIG. 12) a signal broadcast from a known position at an intermediate frequency from the calibration antenna and received with the at least one remote transmission reception point unit, wherein the broadcast signal comprises the processed multiplexed calibration signal; means for identifying (TRANS 12D and/or TRANS 13D; MEM 12B and/or MEM 13B, PROG 12C and/or PROG 13C, and DP 12A and/or DP 13A as in FIG. 12) the relative delays among the more than one antenna from the multiplexor to the central transmission reception point processing unit; then means, based on the identifying, for performing (TRANS 12D and/or TRANS 13D; MEM 12B and/or MEM 13B, PROG 12C and/or PROG 13C, and DP 12A and/or DP 13A as in FIG. 12) correction of the identified relative delays among the more than one antenna for accurately estimating at least one of time of arrival or angle of arrival value coordinates.

In the example aspect of the invention according to the paragraph above, wherein at least the means for detecting, processing, determining, identifying, and performing comprises a non-transitory computer readable medium [MEM 12B and/or MEM 13B] encoded with a computer program [PROG 12C and/or PROG 13C] executable by at least one processor [DP 12A and/or DP 13A].

Further, in accordance with example embodiments of the invention there is circuitry for performing operations in accordance with example embodiments of the invention as disclosed herein. This circuitry can include any type of circuitry including content coding circuitry, content decoding circuitry, processing circuitry, image generation circuitry, data analysis circuitry, etc.). Further, this circuitry can include discrete circuitry, application-specific integrated circuitry (ASIC), and/or field-programmable gate array circuitry (FPGA), etc. as well as a processor specifically configured by software to perform the respective function, or dual-core processors with software and corresponding digital signal processors, etc.). Additionally, there are provided necessary inputs to and outputs from the circuitry, the function performed by the circuitry and the interconnection (perhaps via the inputs and outputs) of the circuitry with other components that may include other circuitry in order to perform example embodiments of the invention as described herein.

In accordance with example embodiments of the invention as disclosed in this application this application, the "circuitry" provided can include at least one or more or all of the following:

(a) hardware-only circuit implementations (such as implementations in only analog and/or digital circuitry);
(b) combinations of hardware circuits and software, such as (as applicable):

(i) a combination of analog and/or digital hardware circuit(s) with software/firmware; and

(ii) any portions of hardware processor(s) with software (including digital signal processor(s)), software, and memory(ies) that work together to cause an apparatus, such as a mobile phone or server, to perform various functions, such as functions or operations in accordance with example embodiments of the invention as disclosed herein); and

(c) hardware circuit(s) and or processor(s), such as a microprocessor(s) or a portion of a microprocessor(s), that requires software (e.g., firmware) for operation, but the software may not be present when it is not needed for operation."

In accordance with example embodiments of the invention, there is adequate circuitry for performing at least operations in accordance with example embodiments of the invention as disclosed in this application, this 'circuitry' as may be used herein refers to at least the following:

(a) hardware-only circuit implementations (such as implementations in only analog and/or digital circuitry); and

(b) to combinations of circuits and software (and/or firmware), such as (as applicable): (i) to a combination of processor(s) or (ii) to portions of processor(s)/software (including digital signal processor(s)), software, and memory(ies) that work together to cause an apparatus, such as a mobile phone or server, to perform various functions); and

(c) to circuits, such as a microprocessor(s) or a portion of a microprocessor(s), that require software or firmware for operation, even if the software or firmware is not physically present.

This definition of 'circuitry' applies to all uses of this term in this application, including in any claims. As a further example, as used in this application, the term "circuitry" would also cover an implementation of merely a processor (or multiple processors) or portion of a processor and its (or their) accompanying software and/or firmware. The term "circuitry" would also cover, for example and if applicable to the particular claim element, a baseband integrated circuit or applications processor integrated circuit for a mobile phone or a similar integrated circuit in a server, a cellular network device, or other network device.

In general, the various embodiments may be implemented in hardware or special purpose circuits, software, logic or any combination thereof. For example, some aspects may be implemented in hardware, while other aspects may be implemented in firmware or software which may be executed by a controller, microprocessor or other computing device, although the invention is not limited thereto. While various aspects of the invention may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

Embodiments of the inventions may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

The word "exemplary" is used herein to mean "serving as an example, instance, or illustration." Any embodiment described herein as "exemplary" is not necessarily to be construed as preferred or advantageous over other embodiments. All of the embodiments described in this Detailed Description are exemplary embodiments provided to enable persons skilled in the art to make or use the invention and not to limit the scope of the invention which is defined by the claims.

The foregoing description has provided by way of exemplary and non-limiting examples a full and informative description of the best method and apparatus presently contemplated by the inventors for carrying out the invention. However, various modifications and adaptations may become apparent to those skilled in the relevant arts in view of the foregoing description, when read in conjunction with the accompanying drawings and the appended claims. However, all such and similar modifications of the teachings of example embodiments of this invention will still fall within the scope of this invention.

It should be noted that the terms "connected," "coupled," or any variant thereof, mean any connection or coupling, either direct or indirect, between two or more elements, and may encompass the presence of one or more intermediate elements between two elements that are "connected" or "coupled" together. The coupling or connection between the elements can be physical, logical, or a combination thereof. As employed herein two elements may be considered to be "connected" or "coupled" together by the use of one or more wires, cables and/or printed electrical connections, as well as by the use of electromagnetic energy, such as electromagnetic energy having wavelengths in the radio frequency region, the microwave region and the optical (both visible and invisible) region, as several non-limiting and non-exhaustive examples.

Furthermore, some of the features of the preferred embodiments of this invention could be used to advantage without the corresponding use of other features. As such, the foregoing description should be considered as merely illustrative of the principles of the invention, and not in limitation thereof.

**Claims**

**1.** An apparatus, comprising:

means for processing a signal from a calibration antenna sent though at least one other antenna of a remote transmission reception point and multiplexed with a broadcast calibration signal to create a multiplexed calibration signal to estimate relative delays;
means for processing a signal broadcast from a known position at an intermediate frequency from the calibration antenna to at least one remote transmission reception point unit, that is received by at least one antenna of another remote transmission reception point and multiplexed with the internal calibration antenna signal to create the multiplexed signal,
said processing comprising;
means for filtering and amplification of each antenna signal with a low-noise amplifier (LNA) in the analogue frontend;
means for mixing down, with a pre-processing circuit of the apparatus, each antenna signal to an individual intermediate frequency, IFi, i = 1, 2,...N;
means for triggering local oscillation by a reference clock (REF Clk); summing up each antenna signals for frequency multiplexing; and
means for amplifying and translating the electrical summed signal into an optical signal for an optical domain; and
means for calibrating the propagation delays from all antenna elements in the system with one of a dual band calibration antenna or two separate antennas at a known position.

2. A transmission reception point apparatus, performing operations comprising:

processing a signal from a calibration antenna sent though at least one other antenna of a remote transmission reception point and multiplexed with a broadcast calibration signal to create a multiplexed calibration signal to estimate relative delays;
processing a signal broadcast from a known position at an intermediate frequency from the calibration antenna to at least one remote transmission reception point unit, that is received by at least one antenna of another remote transmission reception point and multiplexed with the internal calibration antenna signal to create the multiplexed signal,
said processing comprising;

filtering and amplification of each antenna signal with a low-noise amplifier (LNA) in the analogue frontend;
mixing down, with a pre-processing circuit of the apparatus, each antenna signal to an individual intermediate frequency, IFi, i = 1, 2,...N;

triggering local oscillation by a reference clock (REF Clk);
summing up each antenna signals for frequency multiplexing; and
amplifying and translating the electrical summed signal into an optical signal for an optical domain; and

calibrating the propagation delays from all antenna elements in the system with one of a dual band calibration antenna or two separate antennas at a known position.

3. The apparatus as in claim 1 or 2, wherein the mixing down each antenna signal to an individual intermediate frequency, IFi, i = 1, 2,...N is performed so that intermediate frequency bands of the at least one carrier frequency signal do not overlap with each other.

4. The apparatus as in claim 1 or 2, wherein the pre-processed at least one carrier frequency signal is divided into N copies, and wherein the N copies are distributed with controlled path lengths to N antennas using N directional couplers (CPL 1, CPL 2,...CPL N ) for transporting the optical signal to a central processing unit apparatus associated with the communication network.

5. The apparatus as in claim 1 or 2, wherein after multiplexing the antenna signals at least one of the internal calibration antenna signal is used for calibrating the delays among elements within the at least one remote transmission reception point or a known location antenna signal is used for calibrating the delays among the at least one remote transmission reception point.

6. The apparatus as in claim 1 or 2, wherein the translating comprises synchronization is achieved with identical pre-processing in the more than one transmission reception point apparatus.

7. The apparatus as in claim 6, wherein the identical pre-processing is based on known or identical fiber lengths between each of the more than one transmission reception point apparatus and the central processing unit apparatus, no significant temperature differences within a set of the more than one transmission reception point and within a set of fibers due to the indoor deployment, and consolidated sampling controlled by reference clock of all signals in a analog to digital converter block.

8. The apparatus as in claim 3, wherein the creating the multiplexed calibration signal to estimate relative delays comprises: filtering and amplification of a signal at the more than one antenna with a low-noise amplifier in an analogue frontend.

9. The apparatus as in claim 3, wherein the creating the multiplexed calibration signal to estimate relative delays comprises: the signal is mixed down with a pre-processing circuit to an antenna-individual intermediate frequency such that intermediate frequency bands don't overlap with each other.

10. The apparatus as in claim 3, wherein the correction of the identified relative delays comprises:

   further filtering and summing up non-overlapping antenna signals to be equivalent to frequency multiplexing; and

   after amplification of the summed signals, an optical modulator comprising a distributed feedback laser diode translates the broadcast signal into an optical domain.

11. A method, comprising:

   processing a signal from a calibration antenna sent though at least one other antenna of a remote transmission reception point and multiplexed with a broadcast calibration signal to create a multiplexed calibration signal to estimate relative delays;

   processing a signal broadcast from a known position at an intermediate frequency from the calibration antenna to at least one remote transmission reception point unit, that is received by at least one antenna of another remote transmission reception point and multiplexed with the internal calibration antenna signal to create the multiplexed signal,

   said processing comprising;

      filtering and amplification of each antenna signal with a low-noise amplifier (LNA) in the analogue frontend;

      mixing down, with a pre-processing circuit of the apparatus, each antenna signal to an individual intermediate frequency, IFi, i = 1, 2,...N;

      triggering local oscillation by a reference clock (REF Clk);

      summing up each antenna signals for frequency multiplexing; and amplifying and translating the electrical summed signal into an optical signal for an optical domain; and

   calibrating the propagation delays from all antenna elements in the system with one of a dual band calibration antenna or two separate antennas at a known position.

12. A central processing unit apparatus, comprising:

   at least one processor; and

   at least one non-transitory memory including computer program code, where the at least one non-transitory memory and the computer program code are configured with the at least one processor to cause the apparatus to at least:

      translate, in an electrical domain, a frequency multiplexed optical signal comprising a pre-processed at least one carrier frequency signal from more than one antenna array received over an uplink from a transmission reception point apparatus;

      digitize the optical signal centrally in an analogue to digital conversion (ADC) block;

      synchronize the digitized optical signal;

      perform digital down conversion of the digitized optical signal to the baseband; and

      with a baseband process, determine a time of arrival (ToA) and an angle of arrival (AoA) of the uplink signal received at each antenna array.

13. The apparatus as in claim 12, wherein, the at least one non-transitory memory and the computer program code are configured with the at least one processor to cause the apparatus to at least:

      synchronize the digitized optical signal comprising processing a multiplexed calibration signal using a calibration antenna to estimate and calibrate relative delays associated with the multiplexed signal among each antenna array for the more than one transmission reception point apparatus;

      identify the relative delays from the multiplexor to the central transmission reception point processing unit; and

      based on the identifying, perform correction of the identified relative delays among the more than one antenna.

14. The apparatus as in claim 13, wherein processing the multiplexed calibration signal to estimate and calibrate relative delays associated with the multiplexed signal comprises: filtering and amplification of a signal at the more than one antenna with a low-noise amplifier in an analogue frontend.

15. The apparatus as in claim 13, wherein processing the multiplexed calibration signal to estimate and calibrate relative delays associated with the multiplexed signal comprises: the signal is mixed down with a pre-processing circuit to an antenna-individual intermediate frequency such that intermediate frequency bands don't overlap with each other.

16. The apparatus as in claim 13, wherein the correction of the identified relative delays comprises:

further filtering and summing up non-overlapping antenna signals to be equivalent to frequency multiplexing; and

after amplification of the summed signals, an optical modulator comprising a distributed feedback laser diode translates the broadcast signal into an optical domain.

17. The apparatus as in claim 13, wherein values comprising delay offsets between the more than one antenna estimated using an array of digital phase detectors (DPD).

18. The apparatus as in claim 17, wherein the values are stored in memory for table lookup for correction during operation.

19. The apparatus as in claim 13, wherein the correction of the identified relative delays among the more than one antenna is performed for accurately estimating at least one of the time of arrival or angle of arrival value coordinates of the uplink signal received at each antenna array.

20. The apparatus as in claim 13, wherein processing the multiplexed calibration signal comprises:

a photodiode with transimpedance amplifier translates an optical signal back in an electrical domain;

digitalization and baseband processing of selected ones of the at least one remote transmission reception point unit signals in the central transmission reception point processing unit;

signals from all the at least one remote transmission reception point unit are digitized centrally in an analogue to digital conversion block, wherein synchronization is achieved through identical pre-processing in all the at least one remote transmission reception point unit; and known or identical fiber lengths between the at least one remote transmission reception point unit and the central transmission reception point processing unit, no significant temperature differences within the set of the at least one remote transmission reception point unit and within the set of fibers due to the indoor deployment, consolidated sampling controlled by central clock of all signals in the analog to digital conversion block.

21. The apparatus as in claim 20, wherein the identical pre-processing is based on known or identical fiber lengths between each of the more than one transmission reception point apparatus and the central processing unit apparatus, no significant temperature differences within a set of the more than one transmission reception point and within a set of fibers due to the indoor deployment, and consolidated sampling controlled by central clock of all signals in a analog to digital converter block.

22. The apparatus as in claim 13, wherein processing the multiplexed calibration signal comprises a localization method where the processing is centralized at the central transmission reception point processing unit and the central transmission reception point processing unit selects only a subset of the at least one remote transmission reception point unit for processing for minimizing the computing power and/or hardware resources.

23. The apparatus as in claim 22, wherein the localization method is using time of arrival, and a known propagation delay from each of the at least one remote transmission reception point unit.

24. The apparatus as in claim 13, wherein processing the multiplexed calibration signal comprises:

identified relative delays are determined with the signal that is digitized and with delay offsets between antennas estimated using an array of digital phase detector (DPD), wherein the identified delays are sent towards the at least one remote transmission reception point unit and stored in memory for table lookup for the correcting.

25. The apparatus as in claim 13, wherein performing correction of the identified relative delays comprises:

correcting delays among the more than one antenna using a tone at the carrier frequency from the calibration antenna, or

correcting delays among the more than one antenna using a tone at the carrier frequency divided into more than one copy and distributed with controlled path lengths to the more than one antenna using more than one directional couplers.

26. The apparatus as in claim 13, wherein the frequency multiplexed optical signal is received from the calibration antenna.

27. A method, comprising:

translating, in an electrical domain, a frequency multiplexed optical signal comprising a pre-processed at least one carrier frequency signal from more than one antenna array received over an uplink from a transmission reception point apparatus;

digitizing the optical signal centrally in an analogue to digital conversion (ADC) block;

synchronizing the digitized optical signal;

performing digital down conversion of the digitized optical signal to the baseband; and
with a baseband process, determining a time of arrival (ToA) and an angle of arrival (AoA) of the uplink signal received at each antenna array.

28. An apparatus comprising:

means for detecting, a calibration signal that is multiplexed and transmitted at a carrier frequency by at least one remote transmission reception point unit from more than one antenna to a central transmission reception point processing unit;

means for processing the multiplexed calibration signal using a calibration antenna to estimate and calibrate relative delays associated with the multiplexed calibration signal among the more than one antenna for each of the at least one remote transmission reception point unit;

means for determining a signal broadcast from a known position at an intermediate frequency from the calibration antenna and received with the at least one remote transmission reception point unit, wherein the broadcast signal comprises the processed multiplexed calibration signal;

means for identifying the relative delays among the more than one antenna from the multiplexor to the central transmission reception point processing unit; and

means, based on the identifying, for performing correction of the identified relative delays among the more than one antenna for accurately estimating at least one of time of arrival or angle of arrival value coordinates.

FIG. 1

FIG. 2

TRPs as logical entity in 3GPP architecture

Remote TRP Unit (RTU) → Rx Signal → Central TRP processing Unit (CTPU)

Remote TRP Unit (RTU) → Rx Signal → Central TRP processing Unit (CTPU)

Remote TRP Unit (RTU) → Rx Signal → Central TRP processing Unit (CTPU)

FIG. 3

FIG. 4A

RTU # 4

Pre-processing circuit

Spectrum after summing circuit

Frequency (Hz)

$IF_1$ $IF_2$ ..... $IF_N$

Opt. Mod

Amp

$f_{IF}$

Summing circuit (MUX)

Mixer — $IF_1$
LO 1 — $f_c \pm IF_1$

Mixer — $IF_2$
LO 2 — $f_c \pm IF_2$

Mixer — $IF_N$
LO N — $f_c \pm IF_N$

REF Clk

AFE — LNA — $f_c$  #1
AFE — LNA — $f_c$  #2
AFE — LNA — $f_c$  #N

LO — $f_c$

Calibration antenna

FIG. 4B

EP 4 346 130 A2

FIG. 5

EP 4 346 130 A2

FIG. 6A

FIG. 6B

FIG. 7

exp(-j2πIF₁t)

Delay T₁

exp(-j2πIF₂t)

Delay T₂

exp(-j2πIF_Nt)

Delay T_N

After ADC

FIG. 8

RTU # 1 — L₁

RTU # 2 — L₂

Calibration antenna f_c/f_IF

RTU # M — L_M

CTPU

FIG. 9

Calibration antenna broadcasts
signal at $f_c$ to all the RTU

↓

Each RTU multiplexes received
calibration signals from its antennas and
transmit this multiplexed signal to CTPU

↓

CTPU received signals from RTUs and estimate the
relative delays among antennas within each RTU

↓

Calibration antenna broadcasts
signal at fIF to all the RTU

↓

Each RTU receives this signal using an IF
antenna coupled to the output of the MUX

↓

CTPU received signals from RTUs and estimate the
relative delays among RTUs (from MUX to the CTPU)

↓

CTPU stores the obtained delays in the memory
and uses these values for correcting the delays
among antennas within the system for accurately
estimate ToA and AoA during operations

FIG. 10

EP 4 346 130 A2

from ADC 1 →

from ADC 2 →

⋮

from ADC M →

Select RTUs for further processing

→ Baseband down conversation and deskew ⋮ → ToA and AoA estimation for RTU $S_1$ →

→ Baseband down conversation and deskew ⋮ → ToA and AoA estimation for RTU $S_2$ →

⋮ ⋮

→ Baseband down conversation and deskew ⋮ → ToA and AoA estimation for RTU $S_k$ →

UE localization estimation

$D_1$ →
$D_2$ →
⋮
$D_M$ →

FIG. 11

FIG. 12

Processing a signal from a calibration antenna sent though at least one other antenna of a remote transmission reception point and multiplexed with a broadcast calibration signal to create a multiplexed calibration signal to estimate relative delays

Processing a signal broadcast from a known position at an intermediate frequency from the calibration antenna to at least one remote transmission reception point unit, that is received by at least one antenna of another remote transmission reception point and multiplexed with the internal calibration antenna signal to create the multiplexed signal, said processing comprising;

Filtering and amplification of each antenna signal with a low-noise amplifier (LNA) in the analogue frontend

Mixing down, with a pre-processing circuit of the apparatus, each antenna signal to an individual intermediate frequency, IFi, i = 1, 2,...N

Triggering local oscillation by a reference clock (REF Clk)

Summing up each antenna signals for frequency multiplexing

Amplifying and translating the electrical summed signal into an optical signal for an optical domain

Calibrating the propagation delays from all antenna elements in the system with one of a dual band calibration antenna or two separate antennas at a known position

FIG. 13A

1350 Translating, in an electrical domain, a frequency multiplexed optical signal comprising a pre-processed at least one carrier frequency signal from more than one antenna array received over an uplink from a transmission reception point apparatus

1355 Digitizing the optical signal centrally in an analogue to digital conversion (ADC) block

1360 Synchronizing the digitized optical signal

1365 Performing digital down conversion of the digitized optical signal to the baseband

1370 With a baseband process, determining a time of arrival (ToA) and an angle of arrival (AoA) of the uplink signal received at each antenna array

FIG. 13B

1375 — Detecting, a calibration signal that is multiplexed and transmitted at a carrier frequency by at least one remote transmission reception point unit from more than one antenna to a central transmission reception point processing unit

1380 — Processing the multiplexed calibration signal using a calibration antenna to estimate and calibrate relative delays associated with the multiplexed calibration signal among the more than one antenna for each of the at least one remote transmission reception point unit

1385 — Determining a signal broadcast from a known position at an intermediate frequency from the calibration antenna and received with the at least one remote transmission reception point unit, wherein the broadcast signal comprises the processed multiplexed calibration signal

1390 — Identifying the relative delays among the more than one antenna from the multiplexor to the central transmission reception point processing unit

1395 — Based on the identifying, performing correction of the identified relative delays among the more than one antenna for accurately estimating at least one of time of arrival or angle of arrival value

# FIG. 13C